(19)

Europäisches
Patentamt
European
Patent Office
Office européen
des brevets

(11)  **EP 4 455 715 A1**

(12)  **EUROPEAN PATENT APPLICATION**
published in accordance with Art. 153(4) EPC

(43) Date of publication:
**30.10.2024  Bulletin 2024/44**

(21) Application number: **22909902.3**

(22) Date of filing: **19.12.2022**

(51) International Patent Classification (IPC):
*G01S 7/41* (2006.01)     *H04W 24/02* (2009.01)

(52) Cooperative Patent Classification (CPC):
**G01S 7/41; H04W 24/02; H04W 28/16**

(86) International application number:
**PCT/CN2022/139836**

(87) International publication number:
**WO 2023/116589 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **22.12.2021  CN 202111580759**

(71) Applicant: **VIVO MOBILE COMMUNICATION CO.,
LTD.
Dongguan, Guangdong 523863 (CN)**

(72) Inventors:
• **DING, Shengli
  Dongguan, Guangdong 523863 (CN)**
• **JIANG, Dajie
  Dongguan, Guangdong 523863 (CN)**
• **YUAN, Yannan
  Dongguan, Guangdong 523863 (CN)**

(74) Representative: **Conti, Marco
Bugnion S.p.A.
Via di Corticella, 87
40128 Bologna (IT)**

(54)  **PARAMETER DETERMINATION METHOD, APPARATUS, AND DEVICE FOR WIRELESS
SENSING**

(57)    This application discloses a wireless sensing parameter determination method and apparatus and a device, belonging to the field of integrated communication and sensing. The method according to an embodiment of this application includes: determining, by a first device, first parameter adjustment information based on echo signal quality of a first target or a parameter of the first target, the first parameter adjustment information being used to indicate signal transmission and echo signal reception that are at a second moment; where the first device measures an echo signal of a first signal sent at a first moment to obtain the echo signal quality of the first target or the parameter of the first target; or the first device receives the echo signal quality of the first target or the parameter of the first target from a second device, the echo signal quality of the first target or the parameter of the first target being obtained by the second device by measuring the echo signal of the first signal sent at the first moment; where the second moment is after the first moment; a value of a first parameter is determined by a first product, the first product being a product of transmit power of the first signal, transmitting end aperture gain, and receiving end aperture gain; and the parameter of the first target includes at least one of an RCS of the first target and distance information of the first target.

Start

A first device determines first parameter adjustment information based on echo signal quality of a first target or a parameter of the first target, the first parameter adjustment information being used to indicate signal transmission and echo signal reception that are at a second moment, where a value of the first parameter is determined by a first product, the first product being a product of a transmit power of a first signal, transmitting end aperture gain, and receiving end aperture gain

701

End

FIG. 7

**Description**

**CROSS-REFERENCES TO RELATED APPLICATIONS**

This application claims priority to Chinese Patent Application No. 202111580759.8, filed in China on December 22, 2021, which is incorporated herein by reference in its entirety.

**TECHNICAL FIELD**

This application pertains to the field of communication technologies, and specifically relates to a wireless sensing parameter determination method and apparatus and a device.

**BACKGROUND**

Future wireless communication systems are expected to provide various high-precision sensing services, such as indoor positioning for robot navigation, Wi-Fi sensing for smart homes, and radar sensing for autonomous vehicles. Sensing and communication systems are usually designed separately and occupy different bands. However, with the widespread deployment of millimeter-wave and massive multiple input multiple output (Multiple Input Multiple Output, MIMO) technologies, the communication signals in future wireless communication systems often have high resolution in both time and angular domains, making it possible to achieve high-precision sensing using communication signals. Therefore, it is preferable to jointly design sensing and communication systems so that they can share the same band and hardware, to improve frequency efficiency and reduce hardware costs. This has prompted research into integrated sensing and communication (Integrated Sensing And Communication, ISAC). ISAC will become a key technology in future wireless communication systems to support many important application scenarios. For example, in future autonomous vehicle networks, autonomous vehicles will obtain a large amount of information from the network, including ultra-high-resolution maps and near-real-time information, for navigation and avoiding upcoming traffic congestion. In the same context, radar sensors in autonomous vehicles should be able to provide strong, high-resolution obstacle detection capabilities, with resolutions at the centimeter level. ISAC technology for autonomous vehicles offers the possibility of using the same hardware and spectrum resources to achieve high data rate communication and high-resolution obstacle detection. Other applications of ISAC include Wi-Fi-based indoor positioning and activity recognition, communication and sensing for unmanned aerial vehicles, extended reality (Extended Reality, XR), integrated radar and communication, and the like. Each application has different requirements, constraints, and regulatory issues.

Radar detection, which involves using reflected echoes from targets for ranging, speed measurement, and angle measurement, can serve as one of the important use cases for integrated communication and sensing. However, radar technology under integrated communication and sensing scenarios, due to different constraints and application objectives, has many differences from traditional radar technology.

**SUMMARY**

Embodiments of this application provide a wireless sensing parameter determination method and apparatus and a device, which can optimize the system performance and the utilization of power resources and aperture resources in an integrated communication and sensing scenario.

According to a first aspect, a wireless sensing parameter determination method is provided, including: determining, by a first device, first parameter adjustment information based on echo signal quality of a first target or a parameter of the first target, the first parameter adjustment information being used to indicate signal transmission and echo signal reception that are at a second moment.

The first device measures an echo signal of a first signal sent at a first moment to obtain the echo signal quality of the first target or the parameter of the first target; or the first device receives the echo signal quality of the first target or the parameter of the first target from a second device, the echo signal quality of the first target or the parameter of the first target being obtained by the second device by measuring the echo signal of the first signal sent at the first moment.

The second moment is after the first moment; a value of a first parameter is determined by a first product, the first product being a product of transmit power of the first signal, transmitting end aperture gain, and receiving end aperture gain; and the parameter of the first target includes at least one of a radar cross section (Radar Cross Section, RCS) of the first target and distance information of the first target.

According to a second aspect, a wireless sensing parameter determination method is provided, including:
determining, by a third device, an initial value of a first parameter based on a radar cross section RCS of a sensing target included in sensing demand and a maximum effective range of radar detection.

A value of a first parameter is determined by a first product, the first product being a product of a transmit power of a first signal, transmitting end aperture gain, and receiving end aperture gain.

According to a third aspect, a wireless sensing parameter determination apparatus is provided, applied to a first device, including:
a first determination module configured to determine first parameter adjustment information based on echo signal quality of a first target or a parameter of the first target, the first parameter adjustment information being used to indicate signal transmission and echo signal reception that are at a second moment.

The first device measures an echo signal of a first signal sent at a first moment to obtain the echo signal quality of the first target or the parameter of the first target; or the first device receives the echo signal quality of the first target or the parameter of the first target from a second device, the echo signal quality of the first target or the parameter of the first target being obtained by the second device by measuring the echo signal of the first signal sent at the first moment.

The second moment is after the first moment; a value of a first parameter is determined by a first product, the first product being a product of transmit power of the first signal, transmitting end aperture gain, and receiving end aperture gain; and the parameter of the first target includes at least one of a radar cross section RCS of the first target and distance information of the first target.

According to a fourth aspect, a wireless sensing parameter determination apparatus is provided, applied to a third device, including:

a fifth determination module configured to determine an initial value of a first parameter based on a radar cross section RCS of a sensing target included in sensing demand and a maximum effective range of radar detection.

A value of a first parameter is determined by a first product, the first product being a product of a transmit power of a first signal, transmitting end aperture gain, and receiving end aperture gain.

According to a fifth aspect, a first device is provided. The first device includes a processor and a memory. The memory stores a program or instructions capable of running on the processor. When the program or instructions are executed by the processor, the steps of the method according to the first aspect are implemented.

According to a sixth aspect, a first device is provided, including a processor and a communication interface, where the processor is configured to determine first parameter adjustment information based on echo signal quality of a first target or a parameter of the first target, the first parameter adjustment information being used to indicate signal transmission and echo signal reception that are at a second moment; where the second moment is after the first moment; a value of a first parameter is determined by a first product, the first product being a product of transmit power of the first signal, transmitting end aperture gain, and receiving end aperture gain; and the parameter of the first target includes at least one of a radar cross section RCS of the first target and distance information of the first target.

According to a seventh aspect, a third device is provided. The third device includes a processor and a memory. The memory stores a program or instructions capable of running on the processor. When the program or instructions are executed by the processor, the steps of the method according to the second aspect are implemented.

According to an eighth aspect, a third device is provided, including a processor and a communication interface, where the processor is configured to determine an initial value of a first parameter based on a radar cross section RCS of a sensing target included in sensing demand and a maximum effective range of radar detection; where a value of a first parameter is determined by a first product, the first product being a product of a transmit power of a first signal, transmitting end aperture gain, and receiving end aperture gain.

According to a ninth aspect, a readable storage medium is provided, where the readable storage medium stores a program or instructions, and when the program or the instructions are executed by a processor, the steps of the method according to the first aspect are implemented, or the steps of the method according to the second aspect are implemented.

According to a tenth aspect, a chip is provided. The chip includes a processor and a communication interface, the communication interface is coupled to the processor and the processor is configured to run a program or instructions to implement the method according to the first aspect or the method according to the second aspect.

According to an eleventh aspect, a computer program product is provided. The computer program product is stored in a storage medium, and the computer program product is executed by at least one processor so as to implement the steps of the method according to the first aspect or steps of the method according to the second aspect.

In the embodiments of this application, the first device adaptively adjusts the product of the transmit power of the first signal, the transmitting end aperture gain, and the receiving end aperture gain based on the echo signal quality of the first target or the parameter of the first target, to optimize the transmit power and allocation of aperture gain resources of the system while meeting the sensing demand, thereby optimizing the performance and power resource utilization of the integrated communication and sensing system.

**BRIEF DESCRIPTION OF DRAWINGS**

FIG. 1 is a block diagram of a wireless communication system to which embodiments of this application are applicable;
FIG. 2 is a first flowchart of steps of a wireless sensing parameter determination method according to an embodiment of this application;
FIG. 3 is an example diagram of antenna array elements according to an embodiment of this application;
FIG. 4 is a first example diagram of a connection relationship between a transmitting end device, a receiving end device, and a sensing function element in a wireless sensing parameter determination method according to an embodiment of this application;
FIG. 5 is a second example diagram of a connection relationship between a transmitting end device, a receiving end device, and a sensing function element in a wireless sensing parameter determination method according to an embodiment of this application;
FIG. 6 is a third example diagram of a connection relationship between a transmitting end device, a receiving end device, and a sensing function element in a wireless sensing parameter determination method according to an embodiment of this application;
FIG. 7 is a second flowchart of steps of a wireless sensing parameter determination method according to an embodiment of this application;
FIG. 8 is a first schematic structural diagram of a wireless sensing parameter determination apparatus according to an embodiment of this application;
FIG. 9 is a second schematic structural diagram of a wireless sensing parameter determination apparatus according to an embodiment of this application;
FIG. 10 is a first schematic structural diagram of a communication device according to an embodiment of this application; and
FIG. 11 is a second schematic structural diagram of a communication device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.
The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, in this specification and claims, "and/or" indicates at least one of the connected objects, and the character "/" generally indicates an "or" relationship between the contextually associated objects.
It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. However, in the following descriptions, a new radio (New Radio, NR) system is described for illustration purposes, NR terms are used in most of the following descriptions, and these technologies may also be applied to other applications than the NR system application, for example, the 6th generation (6th Generation, 6G) communication system.

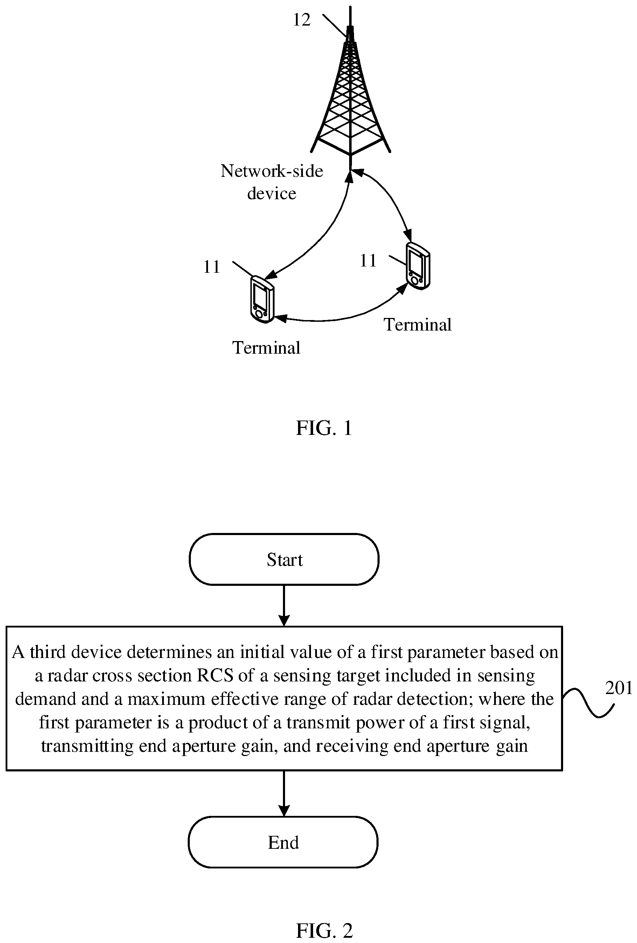

FIG. 1 is a block diagram of a wireless communication system to which embodiments of this application are applicable. The wireless communication system includes a terminal 11 and a network-side device 12. The terminal 11 can be a mobile phone, tablet personal computer (Tablet Personal Computer), laptop computer (Laptop Computer) or notebook computer, personal digital assistant (Personal Digital Assistant, PDA), palmtop computer, netbook, ultra-mobile personal computer (ultra-mobile personal computer, UMPC), mobile internet device (Mobile Internet Device, MID), augmented reality (augmented reality, AR)/virtual reality (virtual reality, VR) device, robots, wearable device (Wearable Device), vehicle user equipment (Vehicle User Equipment, VUE), pedestrian user equipment (Pedestrian User Equipment, PUE), smart home device (wireless communication-enabled home devices such as refrigerators, televisions, washing machines, or furniture), gaming console, personal computer (personal computer, PC), automated teller machine or self-service machine, or other terminal-side device. Wearable devices include smartwatches, smart bands, smart earphones, smart glasses, smart jewelry (smart bangles, smart bracelets, smart rings, smart necklaces, smart foot bangles, and smart anklets), smart wristbands, and smart clothing. It should be noted that the terminal 11 is not limited to any specific type in the embodiments of this application. The network-side device 12 can include an access network device or core network device, where the access network device can also be referred to as a radio access network device, radio access network (Radio Access Network, RAN), radio access network function, or radio access network unit. The access network device can include base stations, wireless local area network (Wireless Local Area Network, WLAN) access points, Wi-Fi nodes, or the like.

The base station can be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effect is achieved, the base station is not limited to any specific technical terminology. It should be noted that in the embodiments of this application, only the base station in the NR system is introduced as an example, and the specific type of the base station is not limited.

The following describes in detail the wireless sensing parameter determination method and apparatus and a device provided in the embodiments of this application through some embodiments and application scenarios thereof with reference to the accompanying drawings.

In integrated sensing and communication wireless sensing applications, radar technology can adopt a single-station radar mode or a dual-station radar mode.

In single-station radar mode, a same antenna is used to transmit and receive signals, and the received signal and transmitted signal enter different radio frequency processing links through a circulator; in this mode, continuous wave signal waveforms can be used to achieve blind zone-free detection, provided that the received signal and transmitted signal are well isolated, typically requiring about an isolation of 100 dB to eliminate the drowning of the received signal by leakage of the transmitted signal. Since a receiver of a single-station radar has all information of the transmitted signal, it can perform signal processing through matched filtering (pulse compression) to obtain a high signal processing gain.

In dual-station radar mode, there is no isolation problem between signal transmission and reception, greatly simplifying the complexity of the hardware. Since radar signal processing is based on known information, in integrated sensing and communication applications, known information such as synchronization signals and reference signals can be used for radar signal processing. However, due to the periodicity of synchronization signals, reference signals, and the like, the ambiguity diagram of the signal waveform is no longer pin-shaped but board-shaped, the time delay and Doppler ambiguities increase, and the gain of the main lobe is much lower than that of the single-station radar mode, reducing a measurement range of distance and speed. Through appropriate parameter set design, the measurement range of distance and speed can meet the measurement needs of common targets such as cars and pedestrians. In addition, the measurement accuracy of dual-station radar is related to the position of the transmitting and receiving sites relative to the target, and it is necessary to select appropriate transmitting and receiving sites to improve detection performance.

It should be noted that a first device, a second device, and a third device provided in the embodiments of this application can be a base station, TRP, terminal equipment (User Equipment, UE), wireless access point (Access Point, AP), reconfigurable intelligent surface (Reconfigurable Intelligence Surface, RIS), and the like.

The wireless sensing parameter determination method provided in the embodiments of this application can also be understood as a joint adaptation method of transmit power and aperture gain, including a joint adaptation method of transmit power and aperture gain in search mode and a joint adaptation method of transmit power and aperture gain in tracking mode.

The search mode refers to a process of discovering targets by traversing each angle interval, and/or distance interval, and/or speed interval within a range specified by sensing prior information in sensing demand at an initial stage of radar detection; once a target parameter is obtained, the search mode ends. The target parameter includes at least one of the following: azimuth, elevation angle, distance, and speed.

The tracking mode refers to a process where, after a radar discovers a target and obtains the target parameter through the aforementioned search mode, it continuously detects the target at a location of the target parameter, or within a certain range that includes the target parameter, and updates the target parameter based on a detection result.

Referring to FIG. 2, FIG. 2 is a first flowchart of steps of a wireless sensing parameter determination method in a search mode according to an embodiment of this application. The parameter determination method includes the following step.

Step 201. A third device determines an initial value of a first parameter based on a radar cross section RCS of a sensing target included in sensing demand and a maximum effective range of radar detection; where a value of a first parameter is determined by a first product, the first product being a product of a transmit power of a first signal, transmitting end aperture gain, and receiving end aperture gain.

The effective range refers to a target distance at which the radar can perform target parameter detection or imaging while meeting a predetermined performance indicator level. The unit can be meters.

In radar detection, the transmit power and the beam gain jointly determine the signal power of the reflected echo of the target, thereby determining the maximum effective range under a certain signal-to-noise ratio requirement and the signal-to-noise ratio (Signal Noise Ratio, SNR) under a certain effective range. That is, the following relationship exists:

$$R_{\max}^4 \propto P_t \cdot G_t \cdot G_r$$

$$SNR \propto P_t \cdot G_t \cdot G_r$$

In the above formulas, $R_{max}$ represents the maximum effective range of radar detection; $P_t$, $G_t$, and $G_r$ respectively represent transmit power, transmitting end antenna gain, and receiving end antenna gain, all in real value units (not in dB); and SNR represents a signal-to-noise ratio at a certain effective range. Specifically, for a single-station radar, $G_t=G_r$.

In order to optimize system performance and implement resource utilization through joint adaptation adjustment of transmit power and aperture gain, the first parameter is set in an embodiment of this application, and the first parameter is $P_t \cdot G_t \cdot G_r$; where $P_t$ represents the transmit power; $G_t$ represents the transmitting end aperture gain; and $G_r$ represents the receiving end aperture gain. It should be noted that the above $P_t$, $G_t$, and $G_r$ are all real value units (not in dB). In particular, in a case of single-station radar, $G_t=G_r$.

In search mode, the initial value of the first parameter is set to cover a maximum effective range requirement and a sensing accuracy requirement for typical targets in the sensing demand.

For example, the sensing target is a vehicle, pedestrian, unmanned aerial vehicle, or the like, and a typical RCS value $\sigma_{RCS}$ of the sensing target is set based on the results of sensing channel measurement and channel modeling. For example, a typical RCS of a pedestrian is -3 dBm², a typical RCS of a motorcycle is 0 dBm², and a typical RCS of a van is 13 dBm², where dBm² represents a logarithmic value of square meter m² per unit area.

For another example, a maximum effective range $R_{max}$ of radar detection is required to be set for a sensing distance range requirement of a sensing target in the sensing demand.

Optionally, for a single-station radar, the initial value $C_i$ of the first parameter is directly proportional to the fourth power of the maximum effective range $R_{max}$ and inversely proportional to the RCS value $\sigma_{RCS}$, that is:

$$C_i \propto \frac{R_{max}^4}{\sigma_{RCS}}$$

Optionally, for a dual-station radar, the initial value $C_i$ of the first parameter is directly proportional to a square of a maximum value of a product of a distance $R_t$ of the target relative to the transmitting end and a distance $R_r$ of the target relative to the receiving end, and inversely proportional to the RCS value $\sigma_{RCS}$, that is:

$$C_i \propto \frac{\left(R_t R_r\right)_{max}^2}{\sigma_{RCS}}.$$

Further, under the constraint of the first parameter, the transmit power $P_t$, transmitting end aperture gain $G_t$, and receiving end aperture gain Gr are set. That is, the method further includes:
configuring, by the third device, the transmit power of the first signal, the transmitting end aperture gain, and the receiving end aperture gain based on the initial value of the first parameter, capability information of a transmitting end device, and capability information of a receiving end device.

The capability information includes an information set of a currently available transmit power configuration and antenna array configuration of the corresponding device.

In an optional embodiment, the configuring, by the third device, the transmit power of the first signal, the transmitting end aperture gain, and the receiving end aperture gain based on the initial value of the first parameter, capability information of a transmitting end device, and capability information of a receiving end device includes:
configuring, by the third device, the transmit power of the first signal, the transmitting end aperture gain, and the receiving end aperture gain in a power-first manner or an aperture-first manner based on the initial value of the first parameter, the capability information of the transmitting end device, and the capability information of the receiving end device.

The power-first manner includes: prioritizing configuring the transmit power to meet a requirement of the first parameter, and in a case that the transmit power reaching an upper limit of a configured power range is still unable to meet the requirement of the first parameter, configuring the transmitting end aperture gain and/or the receiving end aperture gain to meet the requirement of the first parameter.

The aperture-first manner includes: prioritizing configuring the transmitting end aperture gain and/or the receiving end aperture gain to meet the requirement of the first parameter, and in a case that the transmitting end aperture gain and/or the receiving end aperture gain reaching an upper limit of the aperture gain is still unable to meet the requirement of the first parameter, configuring the transmit power to meet the requirement of the first parameter.

It should be noted that the third device determines, based on resource occupancy of a sensing node and/or an indication of a sensing function element, whether to use a power-first manner or an aperture-first manner to set the transmit power of the first signal, the transmitting end aperture gain, and the receiving end aperture gain.

For a dual-station radar, a manner of configuring the transmitting end aperture gain and/or the receiving end aperture gain includes: prioritizing the transmitting end aperture gain or prioritizing the receiving end aperture gain.

The prioritizing the transmitting end aperture gain includes: prioritizing configuring the transmitting end aperture gain, and in a case that the transmitting end aperture gain configuration reaching the upper limit of the transmitting end aperture gain is still unable to meet the requirements of the first parameter, configuring the receiving end aperture gain to meet the requirement of the first parameter.

The prioritizing the receiving end aperture gain includes: prioritizing configuring the receiving end aperture gain, and in a case that the receiving end aperture gain configuration reaching the upper limit of the receiving end aperture gain is still unable to meet the requirement of the first parameter, configuring the transmitting end aperture gain to meet the requirement of the first parameter.

Optionally, the third device determines, based on resource occupancy and/or an indication of a sensing function element, whether to use a transmitting end aperture gain-first manner or a receiving end aperture gain-first manner to configure the aperture gain.

For example, for a single-station radar, the configuration priority of transmit power and aperture gain from high to low is as follows:

(1) transmit power, aperture gain; or
(2) aperture gain, transmit power.

For another example, for a dual-station radar, the aperture gain is divided into transmitting end aperture gain and receiving end aperture gain, so the configuration priority from high to low is as follows:

(1) transmit power, transmitting end aperture gain, receiving end aperture gain;
(2) transmit power, receiving end aperture gain, transmitting end aperture gain;
(3) transmitting end aperture gain, transmit power, receiving end aperture gain;
(4) transmitting end aperture gain, receiving end aperture gain, transmit power;
(5) receiving end aperture gain, transmit power, transmitting end aperture gain; or
(6) receiving end aperture gain, transmitting end aperture gain, transmit power.

Optionally, the setting of the above transmit power can be done in a continuous setting manner, that is, any value within a pre-configured power range can be set to the above transmit power value; or the setting of the above transmit power can be done in a step setting manner, that is, the corresponding transmit power value is set at a certain step interval within the pre-configured power range.

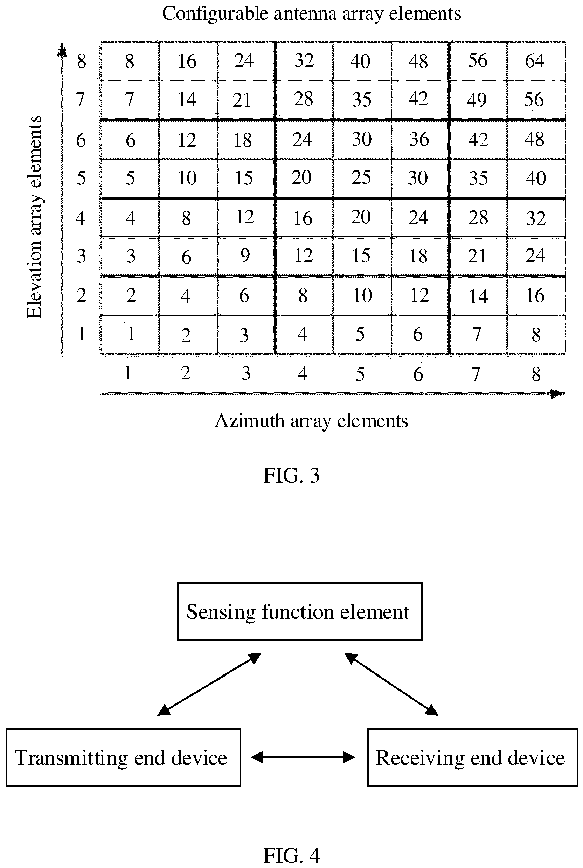

The configuration method of the aperture gain can be: increasing or decreasing several array elements in the azimuth and/or elevation direction of a two-dimensional antenna array. Taking an $8 \times 8$ antenna array as an example, the number of configurable antenna array elements is shown in FIG. 3, then the configurable aperture gain is the aperture gain corresponding to the number of configurable antenna array elements in FIG. 3.

Optionally, during the aperture configuration process, an angle resolution requirement in the sensing demand should also be met, and especially the receiving end aperture configuration should meet the angle resolution requirement; that is, the configured aperture gain should be greater than or equal to the aperture gain required by the angle resolution requirement, which is not further elaborated subsequently.

Optionally, in a transmit power configuration, the transmit power requirement of the communication function and the maximum transmit power specified in the relevant regulations should also be considered. Specifically, the transmit power should be greater than or equal to the transmit power required by the communication function, and less than or equal to the maximum transmit power. Optionally, different transmitting end devices can set different maximum transmit powers, which is not specifically limited herein.

Further optionally, in configuring the transmit power, large-scale and small-scale fading in the signal transmission in the integrated communication and sensing scenario also needs to be considered; and a certain power margin needs to be reserved on the basis of the transmit power obtained according to the above relationship, such as 3 dB. An actual power margin needs to be set according to the channel modeling situation, and is not specifically limited herein.

It should be noted that in the subsequent description of this application, the setting of transmit power needs to meet the transmit power requirement of the communication function, the maximum transmit power requirement specified in the relevant regulations, and the power margin for large-scale and small-scale fading, which is not further elaborated.

Optionally, the third device mentioned above is a transmitting end device of the first signal, or a receiving end device of the first signal, or a sensing function element. The sensing function element mentioned in the embodiments of this application refers to a network node in the core network and/or the wireless access network that is responsible for at least one function such as sensing request processing, sensing resource scheduling, sensing information exchange, and sensing data processing. The network node can be upgraded based on an access and mobility management function (Access and Mobility Management Function, AMF) or location management service (Location Management Function, LMF) in the existing 5G network, or can be another existing or newly defined network node. For the convenience of description, it is uniformly called a sensing function element in this application.

For a dual-station radar (also known as dual-base radar) scenario, the transmitting end device and the receiving end device are different devices, and the connection relationship between the sensing function element, transmitting end device, and receiving end device and a corresponding information exchange method are divided into the following three situations.

(1) Any two of the sensing function element, transmitting end device, and receiving end device have direct communication connections, as shown in FIG. 4. In this case, such two devices can directly exchange information.

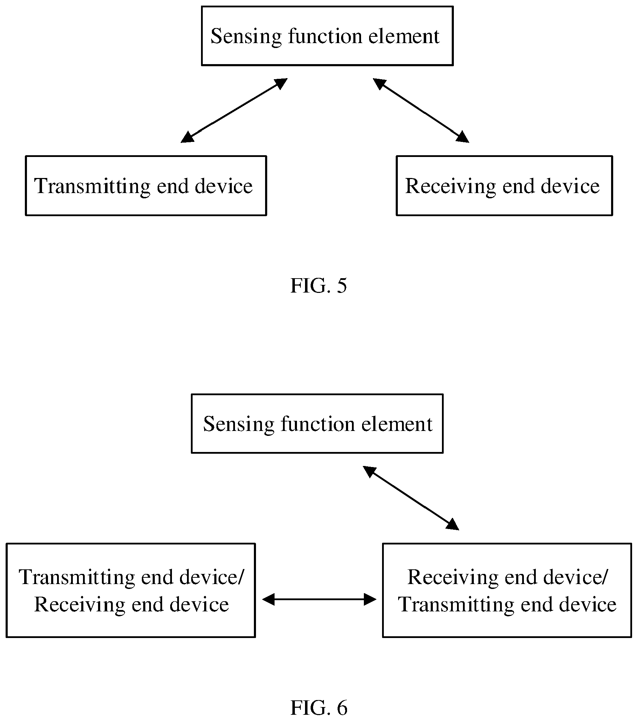

(2) The sensing function element has direct communication connections with both the transmitting end device and the receiving end device, but the transmitting end device and the receiving end device do not have direct communication connections, as shown in FIG. 5. In this case, the sensing function element can directly exchange information with the transmitting end device or the receiving end device, while the information exchange between the transmitting end device and the receiving end device needs to be forwarded by the sensing function element.

(3) The sensing function element has only a direct communication connection with either the transmitting end device or the receiving end device, and the transmitting end device and the receiving end device have direct communication connections, as shown in FIG. 6. In this case, the device with a direct communication connection with the sensing function element can directly exchange information with the sensing function element, while the device without a direct communication connection with the sensing function element needs to implement information exchange with the sensing function element through the device with a direct communication connection with the sensing function element.

For a single-station radar (also known as single-base radar) scenario, the transmitting end device and the receiving end device are the same device, and a connection relationship between the sensing function element and the transmitting end device (that is, the receiving end device) is generally a direct communication connection, that is, the two can directly exchange information; or the two are connected through a third-party device, and they can exchange information through the third-party device.

In at least one embodiment of this application, the third device that determines the initial value of the first parameter in step 201 can be the transmitting end device, or the receiving end device, or the sensing function element.

In another optional embodiment of this application, the device that configures the transmit power of the first signal, the transmitting end aperture gain, and the receiving end aperture gain can be the transmitting end device, or the receiving end device, or the sensing function element. Optionally, the device that determines the initial value of the first parameter and the device that configures the transmit power, transmitting end aperture gain, and receiving end aperture gain can be the same device or different devices; in a case of different devices, the device that determines the initial value of the first parameter sends the initial value of the first parameter to other devices, and the other devices configure the transmit power, transmitting end aperture gain, and receiving end aperture gain.

In an optional embodiment, in a case that the third device is a transmitting end device, the method further includes:

sending, by the transmitting end device, the configured receiving end aperture gain to the receiving end device; and correspondingly

sending, by the transmitting end device, the first signal based on the configured transmit power of the first signal and the configured transmitting end aperture gain; and

receiving, by the receiving end device, the echo signal of the first signal based on the configured receiving end aperture gain.

In another optional embodiment, in a case that the third device is a receiving end device, the method further includes:

sending, by the receiving end device, the configured transmit power of the first signal and the configured transmitting end aperture gain to the transmitting end device; and correspondingly

sending, by the transmitting end device, the first signal based on the configured transmit power of the first signal and the configured transmitting end aperture gain; and

receiving, by the receiving end device, the echo signal of the first signal based on the configured receiving end aperture gain.

In still another optional embodiment, in a case that the third device is a sensing function element, the method further includes:

sending, by the sensing function element, the configured transmit power of the first signal and the configured transmitting end aperture gain to the transmitting end device, and sending the configured receiving end aperture gain to the receiving end device; and correspondingly

sending, by the transmitting end device, the first signal based on the configured transmit power of the first signal and the configured transmitting end aperture gain; and

receiving, by the receiving end device, the echo signal of the first signal based on the configured receiving end aperture gain.

Optionally, in a case that after the transmitting end device sends the first signal, a radar signal processing result of the receiving end or sensing function element indicates that the first target has been found, the joint adaptation method of transmit power and aperture gain in tracking mode is initiated. In a case that the first target is not found, it is considered that there is no corresponding RCS target within a range described in the sensing demand.

In summary, in the embodiment of this application, the third device adaptively adjusts the product of the transmit power of the first signal, the transmitting end aperture gain, and the receiving end aperture gain in the search mode according to the sensing demand, to optimize the transmit power and allocation of aperture gain resources of the system while meeting the sensing demand, thereby optimizing the performance and power resource utilization of the integrated communication and sensing system.

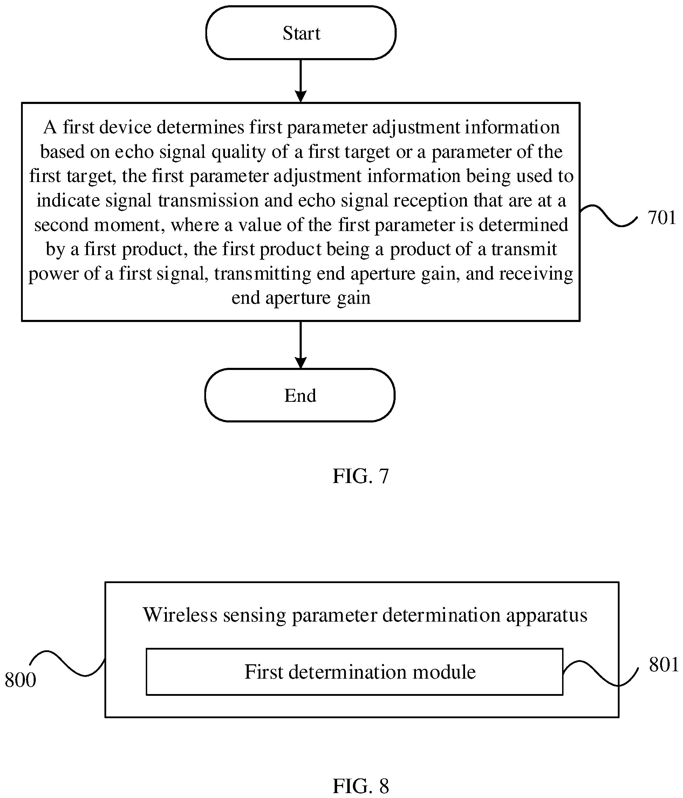

Referring to FIG. 7, FIG. 7 is a second flowchart of steps of a wireless sensing parameter determination method in a tracking mode according to an embodiment of this application. The parameter determination method includes the following step.

Step 701. A first device determines first parameter adjustment information based on echo signal quality of a first target or a parameter of the first target, the first parameter adjustment information being used to indicate signal transmission and echo signal reception that are at a second moment.

The first device measures an echo signal of a first signal sent at a first moment to obtain the echo signal quality of the first target or the parameter of the first target; or the first device receives the echo signal quality of the first target or the parameter of the first target from a second device, the echo signal quality of the first target or the parameter of the first target being obtained by the second device by measuring the echo signal of the first signal sent at the first moment.

The second moment is after the first moment; a value of a first parameter is determined by a first product, the first product being a product of transmit power of the first signal, transmitting end aperture gain, and receiving end aperture gain; and the parameter of the first target includes at least one of a radar cross section RCS of the first target and distance information of the first target.

Optionally, in the embodiment of this application, the first signal can be sent by the first device or the second device. For example, in a single-station radar scenario, the first device sends the first signal, and the first device measures the echo signal of the first signal sent at the first moment to obtain the echo signal quality of the first target or the parameter of the first target; or in a single-station radar scenario, the first device sends the first signal, the first device measures the echo signal of the first signal sent at the first moment to obtain echo data, sends the echo data to the second device, and the second device obtains the echo signal quality of the first target or the parameter of the first target based on the echo data. For another example, in a dual-station radar scenario, the second device sends the first signal, the first device measures the echo signal of the first signal sent at the first moment to obtain the echo signal quality of the first target or the parameter of the first target; or in a dual-station radar scenario, the second device sends the first signal, the first device measures the echo signal of the first signal sent at the first moment to obtain echo data, sends the echo data to the sensing function element, and the sensing function element obtains the echo signal quality of the first target or the parameter of the first target based on the echo data.

In tracking mode, the first device adaptively adjusts the first parameter based on a signal processing result of a target echo, and then jointly adaptively adjusts the transmit power and aperture gain.

The first parameter is $P_t \cdot G_t \cdot G_r$; where $P_t$ represents the transmit power; $G_t$ represents the transmitting end aperture gain; Gr represents the receiving end aperture gain. It should be noted that the above $P_t$, $G_t$, and $G_r$ are all in real value units (not dB units). Specifically, in a case of single-station radar, $G_t = G_r$.

Optionally, the device that detects the first target can be the receiving end device or the sensing function element. For example, the receiving end device obtains the echo data of the first signal, and the receiving end device directly detects the first target; or after the receiving end device obtains the echo data of the first signal, it transmits the echo data to the sensing function element, and the sensing function element detects the first target; or after the receiving end device obtains the echo data of the first signal, it performs part of the radar signal processing calculation to obtain intermediate measurement quantities, and transmits the intermediate measurement quantities to the sensing function element, and the sensing function element detects the first target.

Optionally, in the embodiment of this application, the device that determines the first parameter adjustment information can be the transmitting end device, the receiving end device, or the sensing function element.

Further optionally, the device that detects the first target and the device that determines the first parameter adjustment information can be the same device or different devices, which is not specifically limited herein.

In an optional embodiment, in a case that the device that determines the first parameter adjustment information is the transmitting end device, the transmitting end device can directly configure the transmit power of the first signal, the transmitting end aperture gain, and the receiving end aperture gain based on the first parameter adjustment information; or the method further includes: sending, by the transmitting end device, the first parameter adjustment information to the receiving end device or the sensing function element; and configuring, by the receiving end device or the sensing function element, the transmit power of the first signal, the transmitting end aperture gain, and the receiving end aperture gain based on the first parameter adjustment information.

In another optional embodiment, in a case that the device that determines the first parameter adjustment information is the receiving end device, the receiving end device can directly configure the transmit power of the first signal, the transmitting end aperture gain, and the receiving end aperture gain based on the first parameter adjustment information; or the method further includes: sending, by the receiving end device, the first parameter adjustment information to the transmitting end device or the sensing function element; and configuring, by the transmitting end device or the sensing function element, the transmit power of the first signal, the transmitting end aperture gain, and the receiving end aperture gain based on the first parameter adjustment information.

In yet another optional embodiment, in a case that the first device is the sensing function element, the sensing function element can directly configure the transmit power of the first signal, the transmitting end aperture gain, and the receiving end aperture gain based on the first parameter adjustment information; or the method further includes: sending, by the sensing function element, the first parameter adjustment information to the transmitting end device or the receiving end device; and configuring, by the transmitting end device or the receiving end, the transmit power of the first signal, the transmitting end aperture gain, and the receiving end aperture gain based on the first parameter adjustment information.

The first parameter adjustment information includes any one of the following:

a first value of the first parameter;
a ratio of the first value of the first parameter to a second value of the first parameter; and
a difference between the first value of the first parameter and the second value of the first parameter.

The second value of the first parameter is determined by the transmit power and transmitting end aperture gain corresponding to the signal transmission that is at the first moment and the receiving end aperture gain corresponding to the echo signal reception.

In at least one embodiment of this application, the method further includes:

determining, by the first device, the first value of the first parameter based on the first parameter adjustment information; and
configuring, by the first device, the transmit power of the first signal, the transmitting end aperture gain, and the receiving end aperture gain based on the first value of the first parameter, capability information of a transmitting end device, and capability information of a receiving end device.

The capability information includes an information set of a currently available transmit power configuration and antenna array configuration of the corresponding device.

In an optional embodiment, in a case that a device configuring the transmit power of the first signal, the transmitting end aperture gain, and the receiving end aperture gain is a transmitting end device, the method further includes:

sending, by the transmitting end device, the configured receiving end aperture gain to the receiving end device; and correspondingly
sending, by the transmitting end device, the first signal based on the configured transmit power of the first signal and the configured transmitting end aperture gain; and
receiving, by the receiving end device, the echo signal of the first signal based on the configured receiving end aperture gain.

In another optional embodiment, in a case that a device configuring the transmit power of the first signal, the transmitting end aperture gain, and the receiving end aperture gain is a receiving end device, the method further includes:

sending, by the receiving end device, the configured transmit power of the first signal and the configured transmitting end aperture gain to the transmitting end device; and correspondingly
sending, by the transmitting end device, the first signal based on the configured transmit power of the first signal and the configured transmitting end aperture gain; and
receiving, by the receiving end device, the echo signal of the first signal based on the configured receiving end aperture gain.

In an optional embodiment, in a case that a device configuring the transmit power of the first signal, the transmitting end aperture gain, and the receiving end aperture gain is a sensing function element, the method further includes:

sending, by the sensing function element, the configured transmit power of the first signal and the configured transmitting end aperture gain to the transmitting end device, and sending the receiving end aperture gain to the receiving end device; and correspondingly
sending, by the transmitting end device, the first signal based on the configured transmit power of the first signal and the configured transmitting end aperture gain; and
receiving, by the receiving end device, the echo signal of the first signal based on the configured receiving end aperture gain.

In at least one embodiment of this application, the configuring, by the first device, the transmit power of the first signal, the transmitting end aperture gain, and the receiving end aperture gain based on the first value of the first parameter, capability information of a transmitting end device, and capability information of a receiving end device includes:

configuring, by the first device, the transmit power of the first signal, the transmitting end aperture gain, and the receiving end aperture gain in a power-first manner or an aperture-first manner based on the first value of the first parameter, the capability information of the transmitting end device, and the capability information of the receiving end device.

The power-first manner includes: prioritizing configuring the transmit power to meet a requirement of the first parameter, and in a case that the transmit power reaching an upper limit of a configured power range is still unable to meet the requirement of the first parameter, configuring the transmitting end aperture gain and/or the receiving end aperture gain to meet the requirement of the first parameter.

The aperture-first manner includes: prioritizing configuring the transmitting end aperture gain and/or the receiving end aperture gain to meet the requirement of the first parameter, and in a case that the transmitting end aperture gain and/or the receiving end aperture gain reaching an upper limit of the aperture gain is still unable to meet the requirement of the first parameter, configuring the transmit power to meet the requirement of the first parameter.

It should be noted that the first device determines, based on resource occupancy of a sensing node and/or an indication of a sensing function element, whether to use a power-first manner or an aperture-first manner to set the transmit power of the first signal, the transmitting end aperture gain, and the receiving end aperture gain.

For a dual-station radar, a manner of configuring the transmitting end aperture gain and/or the receiving end aperture gain includes: prioritizing the transmitting end aperture gain or prioritizing the receiving end aperture gain.

The prioritizing the transmitting end aperture gain includes: prioritizing configuring the transmitting end aperture gain, and in a case that the transmitting end aperture gain configuration reaching the upper limit of the transmitting end aperture gain is still unable to meet the requirements of the first parameter, configuring the receiving end aperture gain to meet the requirement of the first parameter.

The prioritizing the receiving end aperture gain includes: prioritizing configuring the receiving end aperture gain, and in a case that the receiving end aperture gain configuration reaching the upper limit of the receiving end aperture gain is still unable to meet the requirement of the first parameter, configuring the transmitting end aperture gain to meet the requirement of the first parameter.

Optionally, the first device determines, based on the resource occupancy and/or the indication of the sensing function element, whether to use a transmitting end aperture gain - first manner or a receiving end aperture gain - first manner to configure the aperture gain.

For example, for a single-station radar, the configuration priority of transmit power and aperture gain is from high to low as follows:

    (1) transmit power, aperture gain; or
    (2) aperture gain, transmit power.

For another example, for a dual-station radar, the aperture gain is divided into transmitting end aperture gain and receiving end aperture gain, so the configuration priority is from high to low as follows:

    (1) transmit power, transmitting end aperture gain, receiving end aperture gain;
    (2) transmit power, receiving end aperture gain, transmitting end aperture gain;
    (3) transmitting end aperture gain, transmit power, receiving end aperture gain;
    (4) transmitting end aperture gain, receiving end aperture gain, transmit power;
    (5) receiving end aperture gain, transmit power, transmitting end aperture gain;
    (6) receiving end aperture gain, transmitting end aperture gain, transmit power.

Optionally, the setting of the above transmit power can be done in a continuous setting manner, that is, any value within the pre-configured power range can be set as the above transmit power value; or the setting of the above transmit power can be done in a step setting manner, that is, the corresponding transmit power value is set at a certain step interval within the pre-configured power range.

The configuration method of the aperture gain can be: increasing or decreasing several array elements in the azimuth and/or elevation direction of a two-dimensional antenna array.

Optionally, during the aperture configuration process, an angle resolution requirement in the sensing demand should also be met, especially the receiving end aperture configuration should meet the angle resolution requirement; that is, the configured aperture gain should be greater than or equal to the aperture gain required by the angle resolution requirement, which is not further elaborated subsequently.

Angle resolution refers to a minimum angle at which two targets can be distinguished in radar detection, and the unit can be degrees or radians.

Optionally, in a transmit power configuration, a transmit power requirement of a communication function and a maximum transmit power specified in the relevant regulations should also be considered; specifically, the transmit power should be greater than or equal to the transmit power required by the communication function, and less than or equal to the maximum transmit power. Optionally, different maximum transmit powers can be set for different transmitting end devices, which is not specifically limited here.

Further optionally, in configuring the transmit power, large-scale and small-scale fading in the signal transmission in the integrated communication and sensing scenario also needs to be considered; and a certain power margin needs to be reserved on the basis of the transmitting power obtained according to the above relationship, such as 3 dB. An actual power margin needs to be set according to the channel modeling situation, and is not specifically limited herein.

It should be noted that in the subsequent description of this application, the setting of transmit power should meet the transmit power requirement of the communication function, the maximum transmit power requirement stipulated by relevant regulations, and the power margin for large-scale and small-scale fading, which is not further elaborated.

In at least one embodiment of this application, the echo signal quality of the first target includes at least one of the following:

echo signal power of the first target;
signal-to-noise ratio SNR of the echo signal from the first target;
signal-to-noise and interference ratio (Signal-to-noise and interference ratio, SINR) of the echo signal from the first target;
reference signal received power (Reference Signal Received Power, RSRP) of the echo signal from the first target; and
reference signal received quality (Reference Signal Received Quality, RSRQ) of the echo signal from the first target.

Optionally, the echo signal power of the first target includes at least one of the following:

in a case that the first signal is a sensing-dominant signal or an integrated communication and sensing signal, the echo signal power from the first target is a total power of the echo signal; and
in a case that the first signal is a communication-dominant signal or a sensing-enhanced communication-dominant signal, such as a 5G NR signal or a Wi-Fi signal, the echo signal power of the first target is power of a preamble (preamble) in the echo signal, and/or a synchronization signal, and/or reference signal; where the reference signal can be a demodulation reference signal (Demodulation reference signals, DM-RS), phase-tracking reference signal (Phase-tracking reference signal, PT-RS), channel state information reference signal (Channel State Information Reference Signal, CSI-RS), positioning reference signal (Positioning Reference Signals, P-RS), sounding reference signal (Sounding Reference Signal, SRS), and the like.

In at least one embodiment of this application, in step 701, the first device determines the first parameter adjustment information based on the echo signal quality of the first target;

the first device determines the first parameter adjustment information based on the first-moment echo signal quality of the first target;
or
the first device determines the first parameter adjustment information based on a second-moment distance prediction value of the first target and the first-moment echo signal quality of the first target.

In at least one embodiment of this application, a goal of adaptively adjusting the first parameter based on the echo signal quality of the first target includes:

goal 1: maintaining the echo signal quality of the first target around a first preset echo quality, where an expression can be $P_{r0} \pm \Delta P_r$ where $P_{r0}$ is the preset first preset echo quality, and $\Delta P_r$ is an allowable echo quality error; or
goal 2: maintaining the echo signal quality of the first target within a first echo quality range, where an expression of the preset first echo quality range can be $[P_{rmin}, P_{rmax}]$, where $P_{rmin}$ is a lower limit of the first echo quality range, and $P_{rmax}$ is an upper limit of the preset echo signal power range.

Optionally, the method further includes: determining the first preset echo quality or the first echo quality range based on a first condition; where the first condition includes at least one of the following:

echo signal quality required by a sensing indicator in the sensing demand;
echo signal quality corresponding to a transmit signal power required by communication quality of a communication function in an integrated sensing and communication application; and
echo signal quality required by an interference level limitation of the communication function in the integrated sensing and communication application.

For example, in a case that the first preset echo quality is a preset echo signal power value, a determination method of the preset echo signal power value includes:

(a) an echo signal power value meeting a sensing indicator requirement in the sensing demand, or an echo signal power value meeting a sensing indicator requirement in the sensing demand and having a certain margin, where the sensing indicator requirement can be sensing accuracy, detection probability/false alarm probability; and
(b) an echo signal power value corresponding to transmit signal power meeting a communication quality requirement of a communication function in the integrated sensing and communication application, and an echo signal power value required by the interference level limitation.

For another example, in a case that the first echo quality range is an echo signal power range, a determination method of the lower limit of the echo signal power range includes:

(a) a minimum echo signal received power meeting a sensing indicator requirement in the sensing demand, where the sensing indicator requirement can be sensing accuracy, detection probability/false alarm probability; and

(b) an echo signal power value corresponding to a critical transmit signal power value for beam failure of the communication function in the integrated sensing and communication application.

A determination method of the upper limit of the echo signal power range includes:

(a) an echo signal power corresponding to a certain level of the sensing indicator, where the sensing indicator requirement can be sensing accuracy, and detection probability/false alarm probability; and

(b) an echo signal power value required by the interference level limitation of the communication function in the integrated sensing and communication application.

In at least one embodiment of this application, that the first device determines the first parameter adjustment information based on the first-moment echo signal quality of the first target includes:

in a case of determining to maintain the echo signal quality of the first target around a first preset echo quality, determining the first parameter adjustment information based on a second value of the first parameter, the first-moment echo signal quality of the first target, and the first preset echo quality; or

in a case of determining to maintain the echo signal quality of the first target within a first echo quality range, determining the first parameter adjustment information based on the second value of the first parameter, the first-moment echo signal quality of the first target, and the first echo quality range.

The determining the first parameter adjustment information based on a second value of the first parameter, the first-moment echo signal quality of the first target, and the first preset echo quality includes:

determining a first value of the first parameter according to a first formula; where the first formula is:

$$C' = \frac{P_{r0}}{P_r} C,$$

where

$C'$ is the first value of the first parameter; C is the second value of the first parameter; $P_{r0}$ is the first preset echo quality; and $P_r$ is the first-moment echo signal quality of the first target.

The determining the first parameter adjustment information based on a second value of the first parameter, the first-moment echo signal quality of the first target, and the first echo quality range includes:

determining a first value of the first parameter according to a second formula; where the second formula is:

$$C' = \frac{P}{P_r} C,$$

where
$C'$ is the first value of the first parameter; C is the second value of the first parameter; and $P_r$ is the first-moment echo signal quality of the first target; and
in a case that the first-moment echo signal quality of the first target is greater than an upper-limit echo quality of the first echo quality range, P is the upper-limit echo quality of the first echo quality range; and the second formula is $C' = \frac{P_{r\max}}{P_r} C$ , $P_{r\max}$ being the upper-limit echo quality of the first echo quality range; or
in a case that the first-moment echo signal quality of the first target is less than a lower-limit echo quality of the first echo quality range, P is the lower-limit echo quality of the first echo quality range; and the second formula is $C' = \frac{P_{r\min}}{P_r} C$ , $P_{r\min}$ being the lower-limit echo quality of the first echo quality range; or

in any case, P is an arithmetic mean or geometric mean of the upper-limit echo quality and lower-limit echo quality of the first echo quality range; and the second formula is $C' = \frac{P_{rmid}}{P_r} C$ , $P_{rmid}$ being the arithmetic mean or geometric mean of the upper-limit echo quality and lower-limit echo quality of the first echo quality range, the arithmetic mean can be understood as $\left(P_{r\,\max} + P_{r\,\min}\right)\big/2$, and the geometric mean can be understood as $\sqrt{P_{r\,\max}P_{r\,\min}}$.

In at least one embodiment of this application, that the first device determines the first parameter adjustment information based on a second-moment distance prediction value of the first target and the first-moment echo signal quality of the first target includes:

in a case of determining to maintain the echo signal quality of the first target around a first preset echo quality, determining the first parameter adjustment information based on a second value of the first parameter, the first-moment echo signal quality of the first target, the first preset echo quality, and the second-moment distance prediction value of the first target;

or

in a case of determining to maintain the echo signal quality of the first target within a first echo quality range, determining the first parameter adjustment information based on a second value of the first parameter, the first-moment echo signal quality of the first target, the first echo quality range, and the second-moment distance prediction value of the first target.

Optionally, a distance of the first target at the second moment is predicted based on maintaining a motion trajectory of the first target and by predicting a position of the first target that is at the second moment to obtain a distance prediction value that is at the second moment.

A premise of the prediction method is: when the first target is traced, since typical targets (such as vehicles and pedestrians) in integrated sensing and communication applications are low-speed targets relative to an update rate of sensing, a target state change between two adjacent radar detections is small. The small change in target state here mainly refers to a small change in target RCS, which can be considered that the target RCS remains almost unchanged in consecutive several radar detections. There are two conditions to meet this situation: one is that the target has little maneuvering, that is, acceleration is small, and a change in a position and speed of the target is not significant, so linear filtering algorithms such as Kalman filtering can be used; the second is that sensing channel characteristics (large-scale and small-scale fading characteristics) do not change much, especially small-scale fading characteristics do not change much. The prediction method is the content implemented by the device, which is not limited herein.

The determining the first parameter adjustment information based on a second value of the first parameter, the first-moment echo signal quality of the first target, the first preset echo quality, and the second-moment distance prediction value of the first target includes:

determining the first value of the first parameter according to a third formula; where the third formula includes:

$$C' = \left(\frac{R'}{R}\right)^4 \frac{P_{r0}}{P_r} C \quad \text{or} \quad C' = \left(\frac{R_t' R_r'}{R_t R_r}\right)^2 \frac{P_{r0}}{P_r} C,$$

where

$C'$ is the first value of the first parameter; C is the second value of the first parameter; $P_{r0}$ is the first preset echo quality; $P_r$ is the first-moment echo signal quality of the first target; R is a distance between the first target and a signal transceiver at the first moment in a single-station radar scenario; $R'$ is a distance prediction value between the first target and the signal transceiver at the second moment in a single-station radar scenario; $R_t$ is a distance between the first target and a transmitting end device at the first moment in a dual-station radar scenario; $R_t'$ is a distance prediction value between the first target and the transmitting end device at the second moment in a dual-station radar scenario; $R_r$ is a distance between the first target and a receiving end device at the first moment in a dual-station radar scenario; and $R_r'$ is a distance prediction value between the first target and the receiving end device at the second moment in a dual-station radar scenario.

The determining the first parameter adjustment information based on a second value of the first parameter, the first-moment echo signal quality of the first target, the first echo quality range, and the second-moment distance prediction value of the first target includes:

determining the first value of the first parameter according to a fourth formula; where the fourth formula includes:

$$C' = \left(\frac{R'}{R}\right)^4 \frac{P}{P_r} C \quad \text{or} \quad C' = \left(\frac{R_t' R_r'}{R_t R_r}\right)^2 \frac{P}{P_r} C,$$

where

$C'$ is the first value of the first parameter; C is the second value of the first parameter; $P_r$ is the first-moment echo signal quality of the first target; R is a distance between the first target and a signal transceiver at the first moment in a single-station radar scenario; $R'$ is a distance prediction value between the first target and the signal transceiver at the second moment in a single-station radar scenario; $R_t$ is a distance between the first target and a transmitting end device at the first moment in a dual-station radar scenario; $R_t'$ is a distance prediction value between the first target and the transmitting end device at the second moment in a dual-station radar scenario; $R_r$ is a distance between the first target and a receiving end device at the first moment in a dual-station radar scenario; and $R_r'$ is a distance prediction value between the first target and the receiving end device at the second moment in a dual-station radar scenario; and

in a case that the first-moment echo signal quality of the first target is greater than an upper-limit echo quality of the first echo quality range, P is the upper-limit echo quality of the first echo quality range; where the fourth formula is 
$$C' = \left(\frac{R'}{R}\right)^4 \frac{P_{r\max}}{P_r} C$$
or

$$C' = \left(\frac{R_t' R_r'}{R_t R_r}\right)^2 \frac{P_{r\max}}{P_r} C$$

, $P_{r\max}$ being the upper-limit echo quality of the first echo quality range; or

in a case that the first-moment echo signal quality of the first target is less than a lower-limit echo quality of the first echo quality range, P is the lower-limit echo quality of the first echo quality range; where the fourth formula is 
$$C' = \left(\frac{R'}{R}\right)^4 \frac{P_{r\min}}{P_r} C$$
or

$$C' = \left(\frac{R_t' R_r'}{R_t R_r}\right)^2 \frac{P_{r\min}}{P_r} C$$

, $P_{r\min}$ being the lower-limit echo quality of the first echo quality range; or

in any case, P is an arithmetic mean or geometric mean of the upper-limit echo quality and lower-limit echo quality of the first echo quality range; where the fourth formula is 
$$C' = \left(\frac{R'}{R}\right)^4 \frac{P_{rmid}}{P_r} C$$
or

$$C' = \left(\frac{R_t' R_r'}{R_t R_r}\right)^2 \frac{P_{rmid}}{P_r} C$$

, $P_{rmid}$ being the arithmetic mean or geometric mean of the upper-limit echo quality and lower-limit echo quality of the first echo quality range; where the arithmetic mean can

be understood as $\left(P_{r\max} + P_{r\min}\right)/2$, and the geometric mean can be understood as $\sqrt{P_{r\max} P_{r\min}}$.

In at least one embodiment of this application, before the determining second-moment first parameter adjustment information based on a parameter of the first target in step 701, the method further includes:

determining the RCS of the first target based on an echo signal power of the first target and a first distance of the first target relative to a transceiver; or
determining the RCS of the first target based on an echo signal power of the first target, a second distance of the first target relative to a transmitting end device, and a third distance of the first target relative to a receiving end device.

In the embodiment of this application, the RCS of the first target is specifically a real-time RCS of the first target; the real-time RCS of the first target is calculated based on a real-time echo power of the target signal and a real-time distance of the target; in the integrated sensing and communication application scenario, the real-time RCS of the first target changes with a relative position of the first target and the radar. When the same target is detected at different angles, the RCS has a certain range of variation. For example, when a van is detected at different angles, its RCS range is approximately -5dBm2 to 25dBm2 (carrier frequency 26GHz); when a pedestrian is detected at different angles, its RCS range is approximately -10dBm2 to 0dBm2 (carrier frequency 26GHz). After the radar captures the first target, an actual RCS value of the first target under current observation can be calculated based on the echo signal power of the first target and the distance of the first target relative to the radar.

For example, in a single-station radar scenario, the real-time RCS of the target is calculated based on the echo signal power and a sensing target distance R. For another example, in a dual-station radar scenario, the real-time RCS of the target is calculated based on the echo signal power, a distance of the target relative to a transmitter, and a distance of the target relative to a receiver.

It should be noted that in a case that the echo signal contains reflected echoes from multiple targets, an echo signal component corresponding to a current tracked target is distinguished through time delay and angle domain filtering, and an echo signal power of the current tracked target is calculated to estimate an RCS of the current target.

Accordingly, the determining first parameter adjustment information based on a parameter of the first target in step 701 includes:

in a single-station radar scenario, the first value of the first parameter is directly proportional to the fourth power of the first distance, and inversely proportional to the RCS of the first target;

or

in a dual-station radar scenario, the first value of the first parameter is directly proportional to the square of the product of the second distance and the third distance, and inversely proportional to the RCS of the first target.

It should be noted that the transmitting end device and the receiving end device mentioned in the embodiment of this invention are the same device in a single-station radar scenario and different devices in a dual-station radar scenario.

Further, it should be noted that the first moment and the second moment mentioned in the embodiment of this invention can be understood as at least one first sensing frame and at least one second sensing frame, and the transmission, reception, and signal processing of the signal are all based on the sensing frame as the time unit; that is, the value of the first parameter of the signal does not change within a same sensing frame, and the adaptation adjustment method of transmit power and aperture gain provided by the embodiment of this application adjusts the transmit power and aperture gain of the transmit signal in a next sensing frame.

In summary, in the embodiment of this application, the first device adaptively adjusts the product of the transmit power of the first signal, the transmitting end aperture gain, and the receiving end aperture gain based on the echo signal quality of the first target and the parameter of the first target, to optimize the transmit power and allocation of aperture gain resources of the system while meeting the sensing demand, thereby optimizing the performance and power resource utilization of the integrated communication and sensing system.

In order to more clearly describe the wireless sensing parameter determination method provided in this embodiment of this application, the following provides description in detail in combination with two examples:

Example 1, joint adaptation adjustment of transmit power and aperture gain for a single-station radar

1. At an initial moment of sensing, the transmitting end device or the sensing function element sets a sensing signal configuration parameter based on a sensing target parameter, a sensing indicator requirement, and sensing prior information in the sensing demand, combined with the capability information of the transmitting end device;

The capability information of the transmitting end device includes: hardware configuration, software configuration, current software and hardware resource occupancy of the transmitting end device, and a type and service priority information of a service currently occupying the software and hardware resources of the transmitting end device.

The sensing target parameter includes at least one of the following:

distance/time delay;
speed/Doppler; and
angle.

The sensing indicator includes at least one of the following:

ranging/angle/speed resolution;
ranging/angle/speed accuracy;
ranging/angle/speed range;
sensing target RCS requirement;
sensing target maneuverability (acceleration);
sensing data rate (update rate of sensing target parameters per unit time, unit: Hz); and
detection probability/false alarm probability;

The role of the sensing prior information is to narrow down a time/space working range of sensing, including at least one of the following:

same sensing target parameters and different sensing indicators: sensing indicators in the prior information are worse than sensing indicators in the sensing demand; for example, the sensing target parameter is distance, and the ranging accuracy requirement in the sensing indicator requirements is at the cm level, while the distance accuracy in the sensing prior information is at the m level; and

different sensing target parameters: information provided in the sensing prior information does not correspond to the sensing target parameters; for example, the sensing target parameter is distance, but the sensing prior information provides a target angle.

The sensing signal configuration parameters include at least one of the following:

signal frequency, working bandwidth; and in a case that the first signal is an orthogonal frequency division multiplexing (Orthogonal Frequency Division Multiplexing, OFDM) signal, also including the OFDM signal subcarrier interval, the number of resource elements (Resource Element, RE) spaced in the frequency domain of the sensing signal, and the number of OFDM symbols spaced in the time domain of the sensing signal;

transmit/receive beam width, beam direction, beam scanning range;

duration of the sensing frame (also referred to as sensing burst);

duty cycle and pulse period of the pulse signal; and transmit power.

A process of setting a sensing signal configuration parameter based on sensing indicator requirements includes at least one of the following:

setting a working bandwidth based on the ranging resolution requirement;

setting a transmit beam width and receive beam width based on the angle resolution requirement;

setting a duration of the sensing burst based on the speed resolution requirement;

setting the number of OFDM symbols spaced in the time domain of the OFDM signal or a duty cycle and pulse period of the pulse signal based on the ranging range requirement;

setting the transmit power and transmit/receive beam gain based on the ranging range, target RCS, and ranging/angle/speed accuracy requirements;

setting a beam scanning range based on the angle range requirement; and

setting a subcarrier interval of the OFDM signal, the number of REs spaced in the frequency domain, or a pulse period of the pulse signal based on the speed range requirement.

2. The transmitting end device or the sensing function element sets the first parameter based on the sensing accuracy requirement and the typical RCS of the sensing target in the sensing demand, combined with the sensing resolution, and then sets the transmit power and aperture gain.

In the joint link adaptation adjustment method of transmit power and aperture gain for a single-station radar, since the transmit and receive share the same aperture, it is only necessary to configure the transmit power and transmit/receive aperture gain based on an initial first parameter.

After the first parameter is determined, the transmitting end device or the sensing function element configures the transmit power and aperture gain based on resource configuration priority information and the capability information of the transmitting end device.

The resource configuration priority information is selected by the transmitting end device or the sensing function element from a resource configuration priority information table based on the configuration of the transmit power and antenna array elements of the transmitting end device, current service occupancy, a sensing service priority in the sensing demand, and the like,

The resource configuration priority information table includes two cases: power-first manner and aperture-first manner.

Power-first manner: prioritize configuring a larger transmit power, then configure the aperture gain to meet the first parameter.

Aperture-first manner: prioritize configuring a larger aperture gain, then configure the transmit power to meet the first parameter.

A lower limit of a transmit power configuration is a transmit power required by the communication function, and an upper limit of the transmit power configuration is the smaller of a maximum transmit power stipulated by the regulations and a maximum transmit power of transmitter hardware;

A lower limit of an aperture gain configuration is an aperture gain of an antenna aperture that meets the angle resolution requirement; an upper limit of an aperture gain configuration is a maximum aperture gain of antenna array hardware, or the currently available antenna array hardware resources are divided into the following two cases:

in a case that sensing service priority information indicated in the sensing demand is higher than priorities of all other services of the transmitting end device, the upper limit of the aperture gain configuration is a maximum aperture gain of the antenna array hardware; and

in a case that the sensing service priority information indicated in the sensing demand is not higher than the priorities of all other services of the transmitting end device, the upper limit of the aperture gain configuration is an aperture gain of currently available antenna array hardware resources; the currently available antenna array hardware resources are antenna array hardware resources remaining after the occupancy by other services with a higher priority than the sensing service priority.

3. The transmitting end device generates and transmits the first signal based on the sensing signal configuration parameter, transmit power, and aperture gain configurations, and receives a target reflected echo signal of the first signal, obtaining target echo data; in a case that the sensing signal configuration parameter, transmit power, and aperture gain are set by the sensing function element, the transmitting end device also needs to receive the sensing signal configuration parameter, transmit power, and aperture gain configurations before generating the first signal.

The first signal can be any one of the following:

communication-dominant signal: such as NR signal, LTE signal, Wi-Fi signal, and the like;

sensing-dominant signal: such as radar signal, including OFDM radar signal (including phase-coded OFDM radar signal), linear frequency modulation (Linear Frequency Modulation, LFM) signal, simple pulse train signal, phase-coded radar signal, and the like;

sensing-enhanced communication-dominant signal: for example, an NR signal whose reference signal time-frequency domain density is redesigned for sensing functions.; and

integrated communication and sensing signal: refers to a signal waveform dedicatedly designed for integrated communication and sensing scenarios, which may include: signal waveforms for reference signal applicability design based on NR signal, multi-symbol OFDM pulse signal waveforms, and the like.

The waveform of the first signal can be a continuous waveform or a pulse waveform.

4. After the transmitting end device obtains the target echo data, radar signal processing of the target echo data includes one of the following three cases.

(1) The transmitting end device performs radar signal processing on the target echo data to obtain measurement quantities.
(2) The transmitting end device sends the target echo data to the sensing function element, and the sensing function element performs radar signal processing on the radar signal to obtain measurement quantities.
(3) The transmitting end device performs part of the radar signal processing calculation to obtain low-level measurement quantities and sends the low-level measurement quantities to the sensing function element, and the sensing function element performs the remaining part of the radar signal processing calculation to obtain high-level measurement quantities.

The radar signal processing includes at least one of the following options:

(a) matched filtering (pulse compression) processing, including:

(1) segmenting a known transmitted signal sequence to generate matched filters, and performing matched filtering processing on the target reflected echo signal in segments; and
(2) performing sliding window correlation processing on the target reflected echo signal with a known transmitted signal.

(b) one-dimensional Fast Fourier Transform (Fast Fourier Transform, FFT) processing: in a case that the sensing demand requires only distance or speed information of the sensing target, only one-dimensional FFT processing is required; including:

(1) fast time dimension one-dimensional FFT processing to extract target distance information; and
(2) slow time dimension one-dimensional FFT processing to extract target speed information;

(c) two-dimensional FFT processing: in a case that the sensing demand requires both distance and speed information of the sensing target, two-dimensional FFT processing is required, that is, fast time dimension FFT and slow time dimension FFT;
(d) three-dimensional FFT processing: in a case that the sensing demand requires distance, speed, and angle information of the sensing target, three-dimensional FFT processing is required, that is, fast time dimension FFT, slow time dimension FFT, and angle dimension FFT; and
(e) angle filtering processing to improve angle sensing accuracy.

The measurement quantities and the grading of measurement quantities include one or more of the following:

(a) primary measurement quantities: refer to measurement quantities that can be directly obtained by a receiver of the sensing node after processes such as antenna coupling, amplification, down-conversion, filtering, automatic gain control (Automatic Gain Control, AGC), analog/digital (Analog to Digital, A/D) sampling, digital down-conversion, digital filtering, and the like, including: complex signals (including I and Q channels), signal amplitude, signal phase, signal power, polarization information, and the like, as well as threshold detection results, maximum/minimum value extraction results and the like of the aforementioned measurement quantities;
(b) secondary measurement quantities: refer to measurement quantities that can be obtained after simple calculations (including: addition, subtraction, multiplication, division, matrix addition, subtraction, and multiplication, matrix transpose, trigonometric operations, square root operations, power operations, and the like, as well as threshold detection results, maximum/minimum value extraction results, and the like of the aforementioned operations) of the primary measurement quantities, including: amplitude ratios, phase differences, received signal angle-of-arrival (Angle-of-Arrival, AOA), transmitted signal angel of departure (Angel of Departure, AOD), time delay (distance) information, distance differences, angle differences, and the like; and
(c) tertiary measurement quantities: refer to measurement quantities that can be obtained after complex calculations (including: FFT/Inverse Fast Fourier Transform (Inverse Fast Fourier Transform, IFFT), Discrete Fourier Transform (Discrete Fourier Transform, DFT)/Inverse Discrete Fourier Transform (Inverse Discrete Fourier Transform, IDFT), two-dimensional FFT (two-dimensional FFT, 2D-FFT), three-dimensional FFT (three-dimensional FFT, 3D-FFT), matched filtering, autocorrelation operations, wavelet transform, digital filtering, and the like, as well as threshold detection results, maximum/minimum value extraction results, and the like of the aforementioned operations) of primary and/or secondary measurement quantities, including: a calculation result of a complex signal (or signal amplitude, or signal phase) after FFT (or IFFT) or its maximum data point, power spectrum or its maximum data point, Doppler shift (velocity), Doppler spread, velocity difference, time delay Doppler two-dimensional diagram or its maximum data point, radar one-dimensional imaging diagram or its maximum data points, radar two-dimensional imaging diagram or its maximum data points, synthetic aperture radar (Synthetic Aperture Radar, SAR) imaging diagram or its maximum data points, and the like.

The measurement quantities have at least one of the following characteristics:

(a) in different sensing use cases, depending on the different sensing target parameters, primary measurement quantities, secondary measurement quantities, and tertiary measurement quantities may all be final sensing results, or none may be the final sensing results, and further processing is required to obtain the final sensing results;

(b) in different sensing use cases, depending on the different sensing target parameters and sensing methods, only primary measurement quantities may be needed (for example, simple information aggregation (Really Simple Syndication, RSS) based human/vehicle flow monitoring), or only primary and secondary measurement quantities may be needed (for example, radar ranging), or primary, secondary, and tertiary measurement quantities may all be needed (for example, radar imaging); and

(c) in different sensing scenarios, depending on the calculation power of a device executing the sensing process, such as a sensing node, a sensing function element, a core network, and an application server, and requirements for sensing indicators, various levels of measurement quantities can be calculated in a same device, or in different devices among the sensing node, sensing function element, core network, and application server; for example:

(1) in a case that the sensing node executing the sensing process has strong calculation power (such as a base station), and a data volume of the sensing measurement quantities is large (transmission time cost is high), and the sensing demand has high requirements for sensing latency, the sensing node can complete the calculation of secondary and/or tertiary measurement quantities, and send the calculation results to the sensing function element, core network, or application server;

(2) in a case that the sensing node executing the sensing process has weak calculation power (such as an Internet of Things terminal), and the data volume of the sensing measurement quantities is large (transmission time cost is high), and the sensing demand has no high requirements for sensing latency but has high requirements for sensing accuracy, the sensing node can complete the calculation of primary measurement quantities, and send the calculation results to the sensing function element, core network, or application server, and then the calculation results to the sensing function element, core network, or application server perform the calculation of secondary and/or tertiary measurement quantities; and

(3) in a case that the data volume of the sensing measurement quantities is small (transmission time cost is small), under scheduling of the core network or application server, any level of calculations of the measurement quantities can be completed in the sensing node, sensing function element, core network, or application server.

5. In a case that the transmitting end device or the sensing function element detects a target in the radar signal processing, it enters the joint adaptation method of transmit power and aperture gain in tracking mode to obtain the first parameter adjustment information, where the method can be as follows:

(1) Adaptively adjusting the first parameter based on the target echo signal quality.

The target echo signal quality can be target echo signal power, target echo signal-to-noise ratio (SNR), target echo signal-to-interference and noise ratio (SINR), reference signal received power (RSRP), and reference signal received quality (RSRQ).

A method of obtaining the echo signal power can be at least one of the following:

performing constant false alarm rate (CFAR) detection based on a one-dimensional time delay map obtained through fast time dimension FFT processing of the echo signal, with the largest-amplitude sample value point that has crossed the CFAR threshold as the target sample value point, and its amplitude as the target signal amplitude;

performing CFAR detection based on a one-dimensional Doppler map obtained through slow time dimension FFT processing of the echo signal, with the largest-amplitude sample value point that has crossed the CFAR threshold as the target sample value point, and its amplitude as the target signal amplitude;

performing CFAR detection based on a two-dimensional time delay-Doppler map obtained through 2D-FFT processing of the echo signal, with the largest-amplitude sample value point that has crossed the CFAR threshold as the target sample value point, and its amplitude as the target signal amplitude; and performing CFAR detection based on a three-dimensional time delay-Doppler-angle map obtained through 3D-FFT processing of the echo signal, with the largest-amplitude sample value point that has crossed the CFAR threshold as the target sample value point, and its amplitude as the target signal amplitude.

In addition to the above determining the target signal amplitude with the largest-amplitude sample value point that has crossed the CFAR threshold as the target sample value point, the method of determining the target signal amplitude can alternatively use an average value of the largest-amplitude sample value point that has crossed the CFAR threshold and its nearest several threshold-crossing sample value points as the target signal amplitude.

The method of obtaining SNR/SINR can be:

performing constant false alarm rate (CFAR) detection based on a one-dimensional delay map obtained through fast time dimension FFT processing of the echo signal, with the largest-amplitude sample value point that has crossed the CFAR threshold as the target sample value point, and its amplitude as the target signal amplitude, and with all sample value points away from the target sample value point by more than $\pm\varepsilon$ sample value points in the one-dimensional map as interference/noise sample value points, calculating their average interference/amplitude as an interference/noise signal amplitude, and finally calculating SNR/SINR based on the target signal amplitude and the interference/noise signal amplitude;
performing CFAR detection based on a one-dimensional Doppler map obtained through slow time dimension FFT processing of the echo signal, with the largest-amplitude sample value point that has crossed the CFAR threshold as the target sample value point, and its amplitude as the target signal amplitude, and with all sample value points away from the target sample value point by more than $\pm\eta$ sample value points in the one-dimensional map as interference/noise sample value points, calculating their average amplitude as an interference/noise signal amplitude, and finally calculating SNR/SINR based on the target signal amplitude and the interference/noise signal amplitude;
performing CFAR detection based on a two-dimensional delay-Doppler map obtained through 2D-FFT processing of the echo signal, with the largest-amplitude sample value point that has crossed the CFAR threshold as the target sample value point, and its amplitude as the target signal amplitude, and with all sample value points away from the target sample value point by more than $\pm\varepsilon$ (fast time dimension) and $\pm\eta$ (slow time dimension) sample value points in the two-dimensional map as interference/noise sample value points, calculating their average amplitude as an interference/noise signal amplitude, and finally calculating SNR/SINR based on the target signal amplitude and the interference/noise signal amplitude; and
performing CFAR detection based on a three-dimensional delay-Doppler-angle map obtained through 3D-FFT processing of the echo signal, with the largest-amplitude sample value point that has crossed the CFAR threshold as the target sample value point, and its amplitude as the target signal amplitude, and with all sample value points away from the target sample value point by more than $\pm\varepsilon$ (fast time dimension), $\pm\eta$ (slow time dimension), and $\pm\delta$ (angle dimension) sample value points in the three-dimensional map as interference/noise sample value points, calculating their average amplitude as an interference/noise signal amplitude, and finally calculating SNR/SINR based on the target signal amplitude and the interference/noise signal amplitude.

In addition to the above determining the target signal amplitude with the largest-amplitude sample value point that has crossed the CFAR threshold as the target sample value point, the method of determining the target signal amplitude can alternatively use an average value of the largest-amplitude sample value point that has crossed the CFAR threshold and its nearest several threshold-crossing sample value points as the target signal amplitude.

The method of determining interference/noise sample value points can further include screening based on the above-determined interference/noise sample value points, where the screening method is: for the one-dimensional delay map, remove several sample value points near the delay of 0, with the remaining interference/noise sample value points as noise sample value points; for the one-dimensional Doppler map, remove several sample value points near the Doppler of 0, with the remaining interference/noise sample value points as interference/noise sample value points; for the two-dimensional delay-Doppler map, remove the interference/noise sample value points in a strip-shaped range composed of several points near the delay of 0 and the entire Doppler range, with the remaining noise sample value points as interference/noise sample value points; for the three-dimensional delay-Doppler-angle map, remove the interference/noise sample value points in a slice-shaped range composed of several points near the time dimension of 0, the entire Doppler range, and the entire angle range, with the remaining interference/noise sample value points as interference/noise sample value points.

(2) Adaptively adjusting the first parameter based on real-time parameters of the target.

The real-time parameters of the target include a real-time distance of the target and a real-time RCS of the target.

The real-time RCS of the target is calculated based on a real-time echo power of the target signal and the real-time distance of the target.

The calculation process of estimating the target RCS can be completed by the transmitting end device; or the transmitting end device reports the sensing measurement quantities to the sensing function element, and the sensing function element executes the calculation process.

Optionally, if the radar is tracking multiple targets at the same time, the transmitting end device or the sensing function element performs the above-mentioned first parameter adaptive process for each target and obtains first parameter adjustment information corresponding to each target; or the transmitting end device or the sensing function element synthesizes parameters of each target and obtains comprehensive first parameter adjustment information applicable to multiple targets.

6. The transmitting end device or the sensing function element configures the transmit power and aperture gain for a next moment based on the first parameter adjustment information. The method includes one of the following options:

power-first manner: as described in step 2, a larger transmit power resource is preferentially used. Then, when the first parameter increases or decreases, the aperture gain resource is adjusted first until the configurable upper and lower limits are reached; and

aperture-first manner: as described in step 2, a larger aperture gain resource is preferentially used. Then, when the first parameter increases or decreases, the transmit power resource is adjusted first until the configurable upper and lower limits are reached.

The configurable lower limit of the transmit power is the transmit power that meets the communication function requirements. The configurable upper limit of the transmit power is a smaller value between a maximum transmit power specified in the relevant regulations and a maximum transmit power of the transmitter hardware.

The configurable lower limit of the antenna aperture is the aperture gain of the antenna aperture that meets the angle resolution requirement. The configurable upper limit of the aperture gain is the maximum aperture gain of the antenna array hardware.

7. In tracking mode, the transmitting end device generates the first signal based on the transmit power and aperture gain for a next moment and performs a sensing process for the next moment, repeating steps 3 to 7 until the sensing process ends.

The methods for ending the sensing process include the following.

(a) Sensing timing ends: The length of the sensing time reaches a sensing duration requirement in the sensing demand, and the sensing process ends.

(b) Sensing indicators are met: Specific sensing indicators in the sensing demand are met, and the sensing process ends. For example, in a radar imaging scenario, the radar imaging operation is completed for an imaging range specified in the sensing demand based on the imaging resolution requirement in the sensing request.

(c) Beam failure: The sensing echo signal power or the sensing echo signal SNR cannot meet the relevant requirements in the sensing demand due to the target being obscured or moving out of the sensing range in the sensing request., and the sensing process ends.

(d) Target loss: The radar cannot establish stable tracking of the target due to movement characteristics (such as frequent acceleration and deceleration, or frequent turning) of the target, resulting in the loss of tracking of the target, and the sensing process ends.

Example 2, joint adaptation of transmit power and aperture gain for a dual-station radar

1. At the initial moment of sensing, based on the sensing target parameters, sensing indicator requirements, and sensing prior information in the sensing demand, combined with the capability information of the transmitting end device and the receiving end device, sensing signal configuration parameters are set. This includes the following options.

(1) The sensing function element sets the sensing signal configuration parameters based on the sensing target parameters, sensing indicator requirements, and sensing prior information in the sensing demand, combined with the obtained capability information of the transmitting end device and the receiving end device, and sends the parameters to the transmitting end device and the receiving end device.

(2) The transmitting end device and the receiving end device set the parts of the sensing signal configuration parameters related to themselves based on the sensing target parameters, sensing indicator requirements, and sensing prior information in the sensing demand, combined with their own capability information.

(3) Either the transmitting end device or the receiving end device sets the sensing signal configuration parameters based on the sensing target parameters, sensing indicator requirements, and sensing prior information in the sensing demand, combined with their own capability information and the obtained capability information of the other device, and sends the parameters to the other device.

Before the transmitting end device or the receiving end device sets sensing signal configuration that includes information related to the other device, the transmitting end device or the receiving end device needs to exchange information with the other device to obtain capability configuration information of the other device.

The sensing function element obtains the capability information of the transmitting end device and the receiving end device in the following two ways.

(1) The sensing function element, or another network node accessible by the sensing function element, has pre-stored the capability information of the transmitting end device and the receiving end device.

(2) The sensing function element exchanges information with the transmitting end device and the receiving end device, and the he transmitting end device and the receiving end device report their own capability information to the sensing function element.

The capability information of the transmitting end device and the receiving end device includes: hardware configuration, software configuration, current software and hardware resource occupancy of the transmitting end device and the receiving end device, and the types and priority information of services currently occupying the software and hardware resources of the transmitting end device and the receiving end device.

The sensing target parameters are the same as those in Example 1;

the sensing indicators are the same as those in Example 1;
the sensing prior information is the same as that in Example 1;
the sensing signal configuration parameters are the same as those in Example 1; and
the process of setting the sensing signal configuration parameters based on the sensing indicator requirements is the same as that in Example 1.

2. The sensing function element, or the transmitting end device, or the receiving end device sets the first parameter based on the sensing accuracy requirements and the typical RCS of the sensing target in the sensing demand, in combination with the sensing resolution, and thereby sets the transmit power and aperture gain.

For the situation where there is a direct communication connection between the transmitting end device and the receiving end device, the path loss per unit length of the sensing channel can be estimated through the communication signal between the transmitting end device and the receiving end device, and this path loss, along with the sensing accuracy requirements, typical target RCS, and effective range, is used to set the first parameter.

After the first parameter is determined, the sensing function element, or the transmitting end device, or the receiving end device configures the transmit power and aperture gain resources based on the resource configuration priority information and the capability information of the transmitting end device and the receiving end device.

In this step, it is determined that an entity that determines the first parameter and configures the transmit power and aperture gain is the same as the entity that sets the sensing signal configuration parameters in step 1, that is:

(1) in a case that the sensing function element sets the sensing signal configuration parameters in step 1, in this step, the sensing function element still determines the first parameter, configures the transmit power and aperture gain, and sends them to the transmitting end device and the receiving end device;

(2) in a case that the transmitting end device sets the sensing signal configuration parameters in step 1, in this step, the transmitting end device still determines the first parameter, configures the transmit power and aperture gain, and sends them to the receiving end device;

(3) in a case that the receiving end device sets the sensing signal configuration parameters in step 1, in this step, the receiving end device still determines the first parameter, configures the transmit power and aperture gain, and sends them to the transmitting end device; and

(4) in a case that the transmitting end device and the receiving end device jointly set the sensing signal configuration in step 1, in this step, either the transmitting end device or the receiving end device determines the first parameter, configures the transmit power and aperture gain, and sends them to the other device.

The resource configuration priority information is selected by the entity executing the configuration of the transmit power and aperture gain, based on the capability information of the transmitting end device and the receiving end device, and the sensing service priority information in the sensing demand, from a resource configuration priority information table.

Resource configuration priority is divided into two cases: power-first manner and aperture-first manner.

Power-first manner: prioritize configuring a larger transmit power, and then configure aperture gain resources to meet the initial first parameter.

Aperture-first manner: prioritize configuring a larger aperture gain, and then configure transmit power resources to meet the initial first parameter.

In the dual-station radar scenario, the aperture gain is divided into transmitting end aperture gain and receiving end aperture gain, so the resource configuration priority information table contains the following 6 items, sorted by configuration priority from high to low:

(1) transmit power, transmitting end aperture gain, receiving end aperture gain;
(2) transmit power, receiving end aperture gain, transmitting end aperture gain;
(3) transmitting end aperture gain, transmit power, receiving end aperture gain;
(4) transmitting end aperture gain, receiving end aperture gain, transmit power;
(5) receiving end aperture gain, transmit power, transmitting end aperture gain; and
(6) receiving end aperture gain, transmitting end aperture gain, transmit power;

The lower limit of the transmit power configuration is the transmit power that meets the requirements of the communication function, and the upper limit of the transmit power configuration is the smaller of the maximum transmit power specified in the relevant regulations and the maximum transmit power of the transmitter hardware.

The lower limit of the receiving end antenna aperture configuration is the aperture gain of the antenna aperture that meets the angle resolution requirement; the upper limit of the transmitting end aperture gain configuration and the receiving end aperture gain configuration is the maximum aperture gain of the antenna array hardware, or the currently available antenna array hardware resources, including the following two cases:

in a case that the sensing service priority information indicated in the sensing demand is higher than priorities of all other services, then the aperture gain configuration upper limit is the maximum aperture gain of the antenna array hardware; and
in a case that the sensing service priority information indicated in the sensing demand is not higher than priorities of all other services, then the aperture gain configuration upper limit is the aperture gain of the currently available antenna array hardware resources; the currently available antenna array hardware resources are those remaining after occupancy by other services with higher priorities than the sensing service priority.

3. The transmitting end device generates and transmits the first signal based on the information related to the transmitting end device in the sensing signal configuration parameters, the transmit power, and the transmitting end aperture gain setting; and

the receiving end device configures the receive beam based on the information related to the receiving end device in the sensing signal configuration parameters and the receiving end aperture gain configuration and receives the target reflected echo signal of the first signal, obtaining the target echo data;

The first signal is the same as that in Example 1.

4. After the receiving end device obtains the target echo data, radar signal processing includes one of the following three cases.

(1) the receiving end device processes the target echo data to obtain measurement quantities;
(2) the receiving end device sends the target echo data to the sensing function element, and then the sensing function element processes the radar signal to obtain measurement quantities; and
(3) the receiving end device performs part of the radar signal processing calculations to obtain low-level measurement quantities and sends the low-level measurement quantities to the sensing function element, and then the sensing function element performs the remaining part of the radar signal processing calculations to obtain high-level measurement quantities.

The method by which the receiving end device sends the target echo data or low-level measurement quantities to the sensing function element is the same as the method in step 1.

The radar signal processing is the same as that in Example 1.

The measurement quantities and grading of measurement quantities are the same as those in Example 1.

The grading of measurement quantities is the same as that in Example 1.

5. If detecting a target during the radar signal processing, the receiving end device or the sensing function element enters the adaptation method in tracking mode to obtain the first parameter adjustment information, including one of the following options:

(1) the receiving end device detects the target and performs the link adaptation method to obtain the first parameter adjustment information;
(2) the receiving end device detects the target and sends the target parameters (distance, speed, angle, target echo signal quality, and the like) to the transmitting end device, and then the transmitting end device performs the link adaptation method to obtain the first parameter adjustment information;
(3) the receiving end device detects the target and sends the target parameters (distance, speed, angle, target echo signal quality, and the like) to the sensing function element, and then the sensing function element performs the link adaptation method to obtain the first parameter adjustment information; and

(4) the sensing function element detects the target and performs the link adaptation method to obtain the first parameter adjustment information.

The method by which the receiving end device sends the target parameters to the sensing function element is the same as the method in step 1.

The first parameter adjustment information includes one of the following options:

(1) a first parameter value for a next moment;
(2) a ratio of the first parameter value for the next moment to a first parameter value for a current moment; and
(3) a difference between the first parameter value for the next moment and the first parameter value for the current moment.

A specific method of performing link adaptation to obtain the first parameter adjustment information can be one of the following options:

(1) performing link adaptation adjustment of the first parameter based on the target echo signal quality; where

the target echo signal quality can be target echo signal power, target echo signal-to-noise ratio (SNR), target echo signal-to-interference-plus-noise ratio (SINR), reference signal received power (RSRP), and reference signal received quality (RSRQ);
a method of obtaining the echo signal power is the same as that in Example 1; and
a method of obtaining the SNR is the same as that in Example 1.

(2) performing joint link adaptation adjustment of transmit power and aperture gain based on real-time parameters of the target; where

the real-time parameters of the target include real-time distance of the target and real-time RCS of the target; and
the real-time RCS of the target is estimated based on the real-time echo power of the target signal and the real-time distance of the target.

Optionally, if the radar is tracking multiple targets at the same time, the receiving end device, or the transmitting end device, or the sensing function element performs the link adaptation process of the first parameter for each target and obtains first parameter adjustment information corresponding to each target; or the receiving end device, or the transmitting end device, or the sensing function element synthesizes parameters of various targets to obtain comprehensive first parameter adjustment information that is applicable to multiple targets.

6. The receiving end device, the transmitting end device, or the sensing function element configures the transmit power and aperture gain based on the first parameter adjustment information according to resource configuration priority information, the capability information of the transmitting end device and the receiving end device, and priorities of the transmit power, transmitting end aperture gain, and receiving end aperture gain in the resource configuration priority information being adjusted from low to high, as described in step 2, including one of the following options:

(1) the receiving end device obtains the first parameter adjustment information, configures the transmit power and aperture gain, and then sends the transmit power and aperture gain to the transmitting end device;
(2) the receiving end device obtains the first parameter adjustment information and sends the first parameter adjustment information to the transmitting end device, and the transmitting end device configures the transmit power and aperture gain and sends the transmit power and aperture gain to the receiving end device;
(3) the receiving end device obtains the first parameter adjustment information and sends the first parameter adjustment information to the sensing function element, and the sensing function element configures the transmit power and aperture gain and sends the transmit power and aperture gain to both the transmitting end device and the receiving end device;
(4) the transmitting end device obtains the first parameter adjustment information, configures the transmit power and aperture gain, and then sends the transmit power and aperture gain to the receiving end device;
(5) the transmitting end device obtains the first parameter adjustment information and sends the first parameter adjustment information to the sensing function element, and the sensing function element configures the transmit power and aperture gain and sends the transmit power and aperture gain to both the transmitting end device and the receiving end device;
(6) the sensing function element obtains the first parameter adjustment information, configures the transmit power and aperture gain, and then sends the transmit power and aperture gain to both the transmitting end device and the receiving end device.

The method of sending information by the transmitting end device and the receiving end device send information is the same as the method in step 3.

7. The transmitting end device adjusts the transmission of the first signal based on the transmit power and aperture gain for the next moment, and the receiving end device adjusts the reception of the echo signal of the first signal based on the aperture gain for the next moment. The transmitting end device and the receiving end device perform the sensing process for the next moment, repeating steps 3 to 7 until the sensing process ends.

The methods for ending the sensing process are the same as those in Example 1.

An entity implementing the wireless sensing parameter determination method provided in the embodiment of this application can be a wireless sensing parameter determination apparatus. The wireless sensing parameter determination apparatus provided in the embodiment of this application is described by using an example in which the wireless sensing parameter determination apparatus performs the wireless sensing parameter determination method in the embodiments of this application.

Referring to FIG. 8, FIG. 8 is a schematic structural diagram of a wireless sensing parameter determination apparatus 800 according to an embodiment of this application. The apparatus applied to a first device includes:

a first determination module 801 configured to determine first parameter adjustment information based on echo signal quality of a first target or a parameter of the first target, the first parameter adjustment information being used to indicate signal transmission and echo signal reception that are at a second moment.

The first device measures an echo signal of a first signal sent at a first moment to obtain the echo signal quality of the first target or the parameter of the first target; or the first device receives the echo signal quality of the first target or the parameter of the first target from a second device, the echo signal quality of the first target or the parameter of the first target being obtained by the second device by measuring the echo signal of the first signal sent at the first moment.

The second moment is after the first moment; a value of a first parameter is determined by a first product, the first product being a product of transmit power of the first signal, transmitting end aperture gain, and receiving end aperture gain; and the parameter of the first target includes at least one of a radar cross section RCS of the first target and distance information of the first target.

In an optional embodiment, in a case that the first device is a transmitting end device, the apparatus further includes:

a first sending module configured to send the first parameter adjustment information to a receiving end device or a sensing function element; or
in a case that the first device is a receiving end device, the apparatus further includes:

a second sending module configured to send the first parameter adjustment information to a transmitting end device or a sensing function element; or
in a case that the first device is a sensing function element, the apparatus further includes:
a third sending module configured to send the first parameter adjustment information to a transmitting end device or a receiving end device.

In an optional embodiment, the first parameter adjustment information includes any one of the following:

a first value of the first parameter;
a ratio of the first value of the first parameter to a second value of the first parameter; and
a difference between the first value of the first parameter and the second value of the first parameter.

The second value of the first parameter is determined by the transmit power and transmitting end aperture gain corresponding to the signal transmission that is at the first moment and the receiving end aperture gain corresponding to the echo signal reception.

In an optional embodiment, the apparatus further includes:

a second determination module configured to determine the first value of the first parameter based on the first parameter adjustment information; and
a first configuration module configured to configure the transmit power of the first signal, the transmitting end aperture gain, and the receiving end aperture gain based on the first value of the first parameter, capability information of a transmitting end device, and capability information of a receiving end device.

The capability information includes an information set of a currently available transmit power configuration and antenna array configuration of the corresponding device.

In an optional embodiment, in a case that the first device is a transmitting end device, the apparatus further includes:

a fourth sending module configured to send the configured receiving end aperture gain to the receiving end device; or
in a case that the first device is a receiving end device, the apparatus further includes:

a fifth sending module configured to send the configured transmit power of the first signal and the configured transmitting end aperture gain to the transmitting end device; or

in a case that the first device is a sensing function element, the apparatus further includes:

a sixth sending module configured to send the configured transmit power of the first signal and the configured transmitting end aperture gain to the transmitting end device, and sending the receiving end aperture gain to the receiving end device.

In an optional embodiment, in a case that the first device is a transmitting end device, the apparatus further includes:

a seventh sending module configured to send the first signal based on the configured transmit power of the first signal and the configured transmitting end aperture gain.

In an optional embodiment, in a case that the first device is a receiving end device, the apparatus further includes:

a first reception module configured to receive the echo signal of the first signal based on the configured receiving end aperture gain.

In an optional embodiment, the first configuration module includes:

a first configuration sub-module configured to configure the transmit power of the first signal, the transmitting end aperture gain, and the receiving end aperture gain in a power-first manner or an aperture-first manner based on the first value of the first parameter, the capability information of the transmitting end device, and the capability information of the receiving end device.

The power-first manner includes: prioritizing configuring the transmit power to meet a requirement of the first parameter, and in a case that the transmit power reaching an upper limit of a configured power range is still unable to meet the requirement of the first parameter, configuring the transmitting end aperture gain and/or the receiving end aperture gain to meet the requirement of the first parameter.

The aperture-first manner includes: prioritizing configuring the transmitting end aperture gain and/or the receiving end aperture gain to meet the requirement of the first parameter, and in a case that the transmitting end aperture gain and/or the receiving end aperture gain reaching an upper limit of the aperture gain is still unable to meet the requirement of the first parameter, configuring the transmit power to meet the requirement of the first parameter.

In an optional embodiment, a manner of configuring the transmitting end aperture gain and/or the receiving end aperture gain includes: prioritizing the transmitting end aperture gain or prioritizing the receiving end aperture gain.

The prioritizing the transmitting end aperture gain includes: prioritizing configuring the transmitting end aperture gain, and in a case that the transmitting end aperture gain configuration reaching the upper limit of the transmitting end aperture gain is still unable to meet the requirements of the first parameter, configuring the receiving end aperture gain to meet the requirement of the first parameter.

The prioritizing the receiving end aperture gain includes: prioritizing configuring the receiving end aperture gain, and in a case that the receiving end aperture gain configuration reaching the upper limit of the receiving end aperture gain is still unable to meet the requirement of the first parameter, configuring the transmitting end aperture gain to meet the requirement of the first parameter.

In an optional embodiment, the echo signal quality of the first target includes at least one of the following:

echo signal power of the first target;
signal-to-noise ratio of the echo signal from the first target;
signal-to-interference and noise ratio of the echo signal from the first target;
reference signal received echo signal power of the first target; and
reference signal received quality of the echo signal from the first target.

In an optional embodiment, the first determination module includes:

a first determination sub-module configured to determine the first parameter adjustment information based on the first-moment echo signal quality of the first target;
or
a second determination sub-module configured to determine the first parameter adjustment information based on a second-moment distance prediction value of the first target and the first-moment echo signal quality of the first target.

In an optional embodiment, the first determination sub-module includes:

a first determination unit configured to: in a case of determining to maintain the echo signal quality of the first target around a first preset echo quality, determine the first parameter adjustment information based on a second value of the first parameter, the first-moment echo signal quality of the first target, and the first preset echo quality;
or
a second determination unit configured to: in a case of determining to maintain the echo signal quality of the first target within a first echo quality range, determine the first parameter adjustment information based on the second value of the first parameter, the first-moment echo signal quality of the first target, and the first echo quality range.

In an optional embodiment, the first determination unit includes:

a first determination sub-unit configured to determine a first value of the first parameter according to a first formula; where the first formula is:

$$C' = \frac{P_{r0}}{P_r} C,$$

where

$C'$ is the first value of the first parameter; C is the second value of the first parameter; $P_{r0}$ is the first preset echo quality; and $P_r$ is the first-moment echo signal quality of the first target.

In an optional embodiment, the second determination unit includes:

a second determination sub-unit configured to determine a first value of the first parameter according to a second formula; and the second formula is:

$$C' = \frac{P}{P_r} C,$$

where

$C'$ is the first value of the first parameter; C is the second value of the first parameter; and $P_r$ is the first-moment echo signal quality of the first target; and
in a case that the first-moment echo signal quality of the first target is greater than an upper-limit echo quality of the first echo quality range, P is the upper-limit echo quality of the first echo quality range; or
in a case that the first-moment echo signal quality of the first target is less than a lower-limit echo quality of the first echo quality range, P is the lower-limit echo quality of the first echo quality range; or
P is an arithmetic mean or geometric mean of the upper-limit echo quality and lower-limit echo quality of the first echo quality range.

In an optional embodiment, the second determination sub-module includes:

a third determination unit configured to: in a case of determining to maintain the echo signal quality of the first target around a first preset echo quality, determine the first parameter adjustment information based on a second value of the first parameter, the first-moment echo signal quality of the first target, the first preset echo quality, and the second-moment distance prediction value of the first target;
or
a fourth determination unit configured to: in a case of determining to maintain the echo signal quality of the first target within a first echo quality range, determine the first parameter adjustment information based on a second value of the first parameter, the first-moment echo signal quality of the first target, the first echo quality range, and the second-moment distance prediction value of the first target.

In an optional embodiment, the third determination unit includes:

a third determination sub-unit configured to determine a first value of the first parameter according to a third formula; where the third formula is:

$$C' = \left(\frac{R'}{R}\right)^4 \frac{P_{r0}}{P_r} C \quad \text{or} \quad C' = \left(\frac{R_t' R_r'}{R_t R_r}\right)^2 \frac{P_{r0}}{P_r} C,$$

where

$C'$ is the first value of the first parameter; C is the second value of the first parameter; $P_{r0}$ is the first preset echo quality; $P_r$ is the first-moment echo signal quality of the first target; R is a distance between the first target and a signal transceiver at the first moment in a single-station radar scenario; $R'$ is a distance prediction value between the first target and the signal transceiver at the second moment in a single-station radar scenario; $R_t$ is a distance between the first target and a transmitting end device at the first moment in a dual-station radar scenario; $R_t'$ is a distance prediction value between the first target and the transmitting end device at the second moment in a dual-station radar scenario; $R_r$ is a distance between the first target and a receiving end device at the first moment in a dual-station radar scenario; and $R_r'$ is a distance prediction value between the first target and the receiving end device at the second moment in a dual-station radar scenario.

In an optional embodiment, the fourth determination unit includes:

a fourth determination sub-unit configured to determine a first value of the first parameter according to a fourth formula; where the fourth formula is:

$$C' = \left(\frac{R'}{R}\right)^4 \frac{P}{P_r} C \quad \text{or} \quad C' = \left(\frac{R_t' R_r'}{R_t R_r}\right)^2 \frac{P}{P_r} C,$$

where

$C'$ is the first value of the first parameter; C is the second value of the first parameter; $P_r$ is the first-moment echo signal quality of the first target; R is a distance between the first target and a signal transceiver at the first moment in a single-station radar scenario; $R'$ is a distance prediction value between the first target and the signal transceiver at the second moment in a single-station radar scenario; $R_t$ is a distance between the first target and a transmitting end device at the first moment in a dual-station radar scenario; $R_t'$ is a distance prediction value between the first target and the transmitting end device at the second moment in a dual-station radar scenario; $R_r$ is a distance between the first target and a receiving end device at the first moment in a dual-station radar scenario; and $R_r'$ is a distance prediction value between the first target and the receiving end device at the second moment in a dual-station radar scenario; and

in a case that the first-moment echo signal quality of the first target is greater than an upper-limit echo quality of the first echo quality range, P is the upper-limit echo quality of the first echo quality range; or

in a case that the first-moment echo signal quality of the first target is less than a lower-limit echo quality of the first echo quality range, P is the lower-limit echo quality of the first echo quality range; or

P is an arithmetic mean or geometric mean of the upper-limit echo quality and lower-limit echo quality of the first echo quality range.

In an optional embodiment, the apparatus further includes:

a third determination module configured to determine the RCS of the first target based on an echo signal power of the first target and a first distance of the first target relative to a transceiver; or

configured to determine the RCS of the first target based on an echo signal power of the first target, a second distance of the first target relative to a transmitting end device, and a third distance of the first target relative to a receiving end device.

In an optional embodiment, the apparatus further includes:

a fourth determination module configured to determine the first preset echo quality or the first echo quality range based on a first condition; where the first condition includes at least one of the following:

echo signal quality required by a sensing indicator in sensing demand;

echo signal quality corresponding to a transmit signal power required by communication quality of a communication function in an integrated sensing and communication application; and

echo signal quality required by an interference level limitation of the communication function in the integrated sensing and communication application.

In the embodiment of this application, the first device adaptively adjusts the product of the transmit power of the first signal, the transmitting end aperture gain, and the receiving end aperture gain based on the echo signal quality of the first target and the parameter of the first target, to optimize the transmit power and allocation of aperture gain resources of the system while meeting the sensing demand, thereby optimizing the performance and power resource utilization of the integrated communication and sensing system.

It should be noted that the wireless sensing parameter determination apparatus provided in this embodiment of this application is an apparatus capable of executing the foregoing wireless sensing parameter determination method, and all embodiments of the foregoing wireless sensing parameter determination method are applicable to the apparatus, with the same or similar beneficial effects achieved.

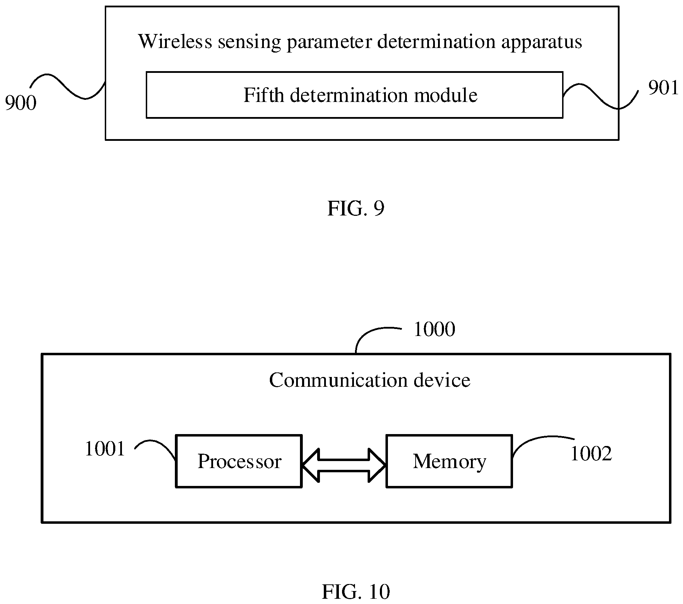

Referring to FIG. 9, FIG. 9 is a schematic structural diagram of a wireless sensing parameter determination apparatus 900 according to an embodiment of this application. The device applied to a third device includes: a fifth determination module 901 configured to determine an initial value of a first parameter based on a radar cross section RCS of a sensing target included in sensing demand and a maximum effective range of radar detection.

A value of a first parameter is determined by a first product, the first product being a product of a transmit power of a first signal, transmitting end aperture gain, and receiving end aperture gain.

In an optional embodiment, the apparatus further includes:

a second configuration module configured to configure the transmit power of the first signal, the transmitting end aperture gain, and the receiving end aperture gain based on the initial value of the first parameter, capability information of a transmitting end device, and capability information of a receiving end device.

The capability information includes an information set of a currently available transmit power configuration and antenna array configuration of the corresponding device.

In an optional embodiment, the second configuration module includes:

a second configuration sub-module configured to configure the transmit power of the first signal, the transmitting end aperture gain, and the receiving end aperture gain in a power-first manner or an aperture-first manner based on the initial value of the first parameter, the capability information of the transmitting end device, and the capability information of the receiving end device.

The power-first manner includes: prioritizing configuring the transmit power to meet a requirement of the first parameter, and in a case that the transmit power reaching an upper limit of a configured power range is still unable to meet the requirement of the first parameter, configuring the transmitting end aperture gain and/or the receiving end aperture gain to meet the requirement of the first parameter.

The aperture-first manner includes: prioritizing configuring the transmitting end aperture gain and/or the receiving end aperture gain to meet the requirement of the first parameter, and in a case that the transmitting end aperture gain and/or the receiving end aperture gain reaching an upper limit of the aperture gain is still unable to meet the requirement of the first parameter, configuring the transmit power to meet the requirement of the first parameter.

In an optional embodiment, a manner of configuring the transmitting end aperture gain and/or the receiving end aperture gain includes: prioritizing the transmitting end aperture gain or prioritizing the receiving end aperture gain.

The prioritizing the transmitting end aperture gain includes: prioritizing configuring the transmitting end aperture gain, and in a case that the transmitting end aperture gain configuration reaching the upper limit of the transmitting end aperture gain is still unable to meet the requirements of the first parameter, configuring the receiving end aperture gain to meet the requirement of the first parameter.

The prioritizing the receiving end aperture gain includes: prioritizing configuring the receiving end aperture gain, and in a case that the receiving end aperture gain configuration reaching the upper limit of the receiving end aperture gain is still unable to meet the requirement of the first parameter, configuring the transmitting end aperture gain to meet the requirement of the first parameter.

In an optional embodiment, in a case that the third device is a transmitting end device, the apparatus further includes:

an eighth sending module configured to send the configured receiving end aperture gain to the receiving end device; or
in a case that the third device is a receiving end device, the apparatus further includes:

a ninth sending module configured to send the configured transmit power of the first signal and the configured transmitting end aperture gain to the transmitting end device; or
in a case that the third device is a sensing function element, the apparatus further includes:
a tenth sending module configured to send the configured transmit power of the first signal and the configured transmitting end aperture gain to the transmitting end device, and sending the configured receiving end aperture gain to the receiving end device.

In an optional embodiment, in a case that the first device is a transmitting end device, the apparatus further includes:
an eleventh sending module configured to send the first signal based on the configured transmit power of the first signal and the configured transmitting end aperture gain.

In an optional embodiment, in a case that the third device is a receiving end device, the apparatus further includes:

a second reception module configured to receive the echo signal of the first signal based on the configured receiving end aperture gain.

In the embodiment of this application, the third device adaptively adjusts the product of the transmit power of the first signal, the transmitting end aperture gain, and the receiving end aperture gain in the search mode according to the sensing demand, to optimize the transmit power and allocation of aperture gain resources of the system while meeting the sensing demand, thereby optimizing the performance and power resource utilization of the integrated communication and sensing system.

It should be noted that the wireless sensing parameter determination apparatus provided in this embodiment of this application is an apparatus capable of executing the foregoing wireless sensing parameter determination method, and all embodiments of the foregoing wireless sensing parameter determination method are applicable to the apparatus, with the same or similar beneficial effects achieved.

The wireless sensing parameter determination apparatus in the embodiments of this application may be an electronic device, for example an electronic device having an operating system, or may be a component of an electronic device, for example, an integrated circuit or a chip. The electronic device may be a terminal or a device other than terminals. For example, the terminal may include but is not limited to the types of the terminal 11 listed above, and the other devices may be servers, network attached storage (Network Attached Storage, NAS), or the like, which are not specifically limited in the embodiments of this application.

The wireless sensing parameter determination apparatus provided in this embodiment of this application can implement processes implemented in the method embodiments of FIG. 2 to FIG. 7, and achieve a same technical effect. To avoid repetition, details are not described herein again.

Optionally, as shown in FIG. 10, an embodiment of this application further provides a communication device 1000 including a processor 1001 and a memory 1002, where the memory 1002 stores a program or instructions capable of running on the processor 1001. For example, in a case that the communication device 1000 is a first device, and when the program or instructions are executed by the processor 1001, the processes of the foregoing embodiment of the wireless sensing parameter determination method are implemented, with the same technical effects achieved. In a case that the communication device 1000 is a third device and when the program or the instructions are executed by the processor 1001, the steps of the foregoing embodiment of the wireless sensing parameter determination method are implemented, with the same technical effects achieved. To avoid repetition, details are not described herein again.

An embodiment of this application further provides a communication device, including a processor and a communication interface, where the processor is configured to determine first parameter adjustment information based on echo signal quality of a first target or a parameter of the first target; the first parameter adjustment information being used to indicate signal transmission and echo signal reception that are at a second moment, where the second moment is after the first moment; a value of a first parameter is determined by a first product, the first product being a product of transmit power of the first signal, transmitting end aperture gain, and receiving end aperture gain; and the parameter of the first target includes at least one of a radar cross section RCS of the first target and distance information of the first target; or the processor is configured to determine an initial value of a first parameter based on a radar cross section RCS of a sensing target included in sensing demand and a maximum effective range of radar detection; where a value of a first parameter is determined by a first product, the first product being a product of a transmit power of a first signal, transmitting end aperture gain, and receiving end aperture gain. This communication device embodiment corresponds to the foregoing first device method embodiment or the third device method embodiment. All processes and implementations in the foregoing method embodiment can be applicable to this communication device embodiment, with the same technical effect achieved.

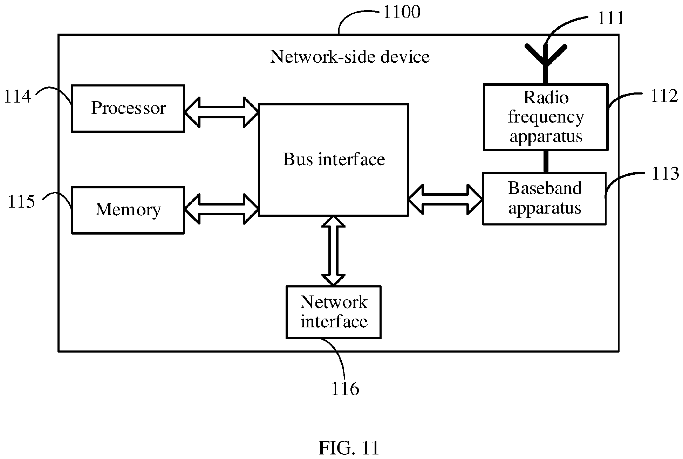

Specifically, an embodiment of this application further provides a network-side device. As shown in FIG. 11, the network-side device 1100 includes an antenna 111, a radio frequency apparatus 112, a baseband apparatus 113, a processor 114, and memory 115. The antenna 111 is connected to the radio frequency apparatus 112. Uplink, the radio frequency apparatus 112 receives information through the antenna 111, and sends the received information to the baseband apparatus 113 for processing. Downlink, the baseband apparatus 113 processes to-be-sent information, and sends the information to the radio frequency apparatus 112; and the radio frequency apparatus 112 processes the received information and then sends the information out through the antenna 111.

The method executed by the network-side device in the foregoing embodiments may be implemented on the baseband apparatus 113. The baseband apparatus 113 includes a baseband processor.

The baseband apparatus 113 may include, for example, at least one baseband processing unit, where a plurality of chips are disposed on the baseband processing unit. As shown in FIG. 11, one of the chips is, for example, a baseband processor and connected to the memory 115 through a bus interface, to invoke the program in the memory 115 to perform the operations of the network device shown in the foregoing method embodiment.

The network-side device further includes a network interface 116, where the interface is, for example, a common public radio interface (Common Public Radio Interface, CPRI).

Specifically, the network-side device 1100 in this embodiment of the present invention further includes: an instruction or program stored in the memory 115 and executable on the processor 114. The processor 114 invokes the instruction or program in the memory 115 to execute the method executed by the modules shown in FIG. 8 or 9, with the same technical effects achieved. To avoid repetition, details are not described herein again.

An embodiment of this application also provides a readable storage medium having a program or instructions stored thereon. When the program or instructions are executed by the processor the processes in the foregoing wireless sensing parameter determination method embodiment are implemented with the same technical effects achieved. To avoid repetition, details are not further described now.

The processor is a processor in the terminal described in the foregoing embodiment. The readable storage medium includes a computer-readable storage medium such as a computer read-only memory (Read-Only Memory, ROM), a random access memory (Random Access Memory, RAM), a magnetic disk, or an optical disc.

An embodiment of this application also provides a chip including a processor and a communication interface. The communication interface is coupled with the processor and the processor is configured to execute the program or instructions to implement the processes in the foregoing wireless sensing parameter determination method embodiment with the same technical effects achieved. To avoid repetition, details are not further described now.

It should be understood that the chip mentioned in an embodiment of this application may also be referred to as a system-level chip, a system chip, a chip system, a system-on-chip, or the like.

An embodiment of this application further provides a computer program product, where the computer program product is stored in a readable storage medium, and the computer program product is executed by at least one processor to implement the processes of the foregoing wireless sensing parameter determination method embodiments, with the same technical effects achieved. To avoid repetition, details are not described herein again.

It should be noted that in this specification, the terms "comprise" and "include", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more restrictions, an element preceded by the statement "includes a... " does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

**Claims**

1.  A wireless sensing parameter determination method, comprising:

    determining, by a first device, first parameter adjustment information based on echo signal quality of a first target or a parameter of the first target, the first parameter adjustment information being used to indicate signal transmission and echo signal reception that are at a second moment; wherein
    the first device measures an echo signal of a first signal sent at a first moment to obtain the echo signal quality of the first target or the parameter of the first target; or the first device receives the echo signal quality of the first target or the parameter of the first target from a second device, the echo signal quality of the first target or the parameter of the first target being obtained by the second device by measuring the echo signal of the first signal sent at the first moment; wherein
the second moment is after the first moment; a value of a first parameter is determined by a first product, the first product being a product of transmit power of the first signal, transmitting end aperture gain, and receiving end aperture gain; and the parameter of the first target comprises at least one of a radar cross section RCS of the first target and distance information of the first target.

2.  The method according to claim 1, wherein in a case that the first device is a transmitting end device, the method further comprises:

    sending, by the transmitting end device, the first parameter adjustment information to a receiving end device or a sensing function element; or
    in a case that the first device is a receiving end device, the method further comprises:

    sending, by the receiving end device, the first parameter adjustment information to the transmitting end device or the sensing function element; or
    in a case that the first device is a sensing function element, the method further comprises:
    sending, by the sensing function element, the first parameter adjustment information to the transmitting end device or the receiving end device.

3.  The method according to claim 1 or 2, wherein the first parameter adjustment information comprises any one of the following:

    a first value of the first parameter;
    a ratio of the first value of the first parameter to a second value of the first parameter; and
    a difference between the first value of the first parameter and the second value of the first parameter; wherein
    the second value of the first parameter is determined by the transmit power and transmitting end aperture gain corresponding to the signal transmission that is at the first moment and the receiving end aperture gain corresponding to the echo signal reception.

4.  The method according to claim 3, wherein the method further comprises:

determining, by the first device, the first value of the first parameter based on the first parameter adjustment information; and

configuring, by the first device, the transmit power of the first signal, the transmitting end aperture gain, and the receiving end aperture gain based on the first value of the first parameter, capability information of a transmitting end device, and capability information of a receiving end device; wherein

the capability information comprises an information set of a currently available transmit power configuration and antenna array configuration of the corresponding device.

5. The method according to claim 4, wherein in a case that the first device is a transmitting end device, the method further comprises:

sending, by the transmitting end device, the configured receiving end aperture gain to the receiving end device; or

in a case that the first device is a receiving end device, the method further comprises:

sending, by the receiving end device, the configured transmit power of the first signal and the configured transmitting end aperture gain to the transmitting end device; or

in a case that the first device is a sensing function element, the method further comprises:

sending, by the sensing function element, the configured transmit power of the first signal and the configured transmitting end aperture gain to the transmitting end device, and sending the receiving end aperture gain to the receiving end device.

6. The method according to claim 5, wherein in a case that the first device is a transmitting end device, the method further comprises:
sending, by the transmitting end device, the first signal based on the configured transmit power of the first signal and the configured transmitting end aperture gain.

7. The method according to claim 5, wherein in a case that the first device is a receiving end device, the method further comprises:
receiving, by the receiving end device, the echo signal of the first signal based on the configured receiving end aperture gain.

8. The method according to claim 4, wherein the configuring, by the first device, the transmit power of the first signal, the transmitting end aperture gain, and the receiving end aperture gain based on the first value of the first parameter, capability information of a transmitting end device, and capability information of a receiving end device comprises:

configuring, by the first device, the transmit power of the first signal, the transmitting end aperture gain, and the receiving end aperture gain in a power-first manner or an aperture-first manner based on the first value of the first parameter, the capability information of the transmitting end device, and the capability information of the receiving end device; wherein

the power-first manner comprises: prioritizing configuring the transmit power to meet a requirement of the first parameter, and in a case that the transmit power reaching an upper limit of a configured power range is still unable to meet the requirement of the first parameter, configuring the transmitting end aperture gain and/or the receiving end aperture gain to meet the requirement of the first parameter; and

the aperture-first manner comprises: prioritizing configuring the transmitting end aperture gain and/or the receiving end aperture gain to meet the requirement of the first parameter, and in a case that the transmitting end aperture gain and/or the receiving end aperture gain reaching an upper limit of the aperture gain is still unable to meet the requirement of the first parameter, configuring the transmit power to meet the requirement of the first parameter.

9. The method according to claim 8, wherein a manner of configuring the transmitting end aperture gain and/or the receiving end aperture gain comprises: prioritizing the transmitting end aperture gain or prioritizing the receiving end aperture gain; wherein

the prioritizing the transmitting end aperture gain comprises: prioritizing configuring the transmitting end aperture gain, and in a case that the transmitting end aperture gain configuration reaching the upper limit of the transmitting end aperture gain is still unable to meet the requirements of the first parameter, configuring the receiving end aperture gain to meet the requirement of the first parameter; and

the prioritizing the receiving end aperture gain comprises: prioritizing configuring the receiving end aperture gain, and in a case that the receiving end aperture gain configuration reaching the upper limit of the receiving end aperture gain is still unable to meet the requirement of the first parameter, configuring the transmitting end aperture gain to meet the requirement of the first parameter.

10. The method according to claim 1, wherein the echo signal quality of the first target comprises at least one of the following:

echo signal power of the first target;

signal-to-noise ratio of the echo signal from the first target;

signal-to-interference and noise ratio of the echo signal from the first target;

reference signal received echo signal power of the first target; and

reference signal received quality of the echo signal from the first target.

11. The method according to claim 1 or 10, wherein the first device determines the first parameter adjustment information for the second moment based on the echo signal quality of the first target;

the first device determines the first parameter adjustment information based on the first-moment echo signal quality of the first target;

or

the first device determines the first parameter adjustment information based on a second-moment distance prediction value of the first target and the first-moment echo signal quality of the first target.

12. The method according to claim 11, wherein that the first device determines the first parameter adjustment information based on the first-moment echo signal quality of the first target comprises:

in a case of determining to maintain the echo signal quality of the first target around a first preset echo quality, determining the first parameter adjustment information based on a second value of the first parameter, the first-moment echo signal quality of the first target, and the first preset echo quality;

or

in a case of determining to maintain the echo signal quality of the first target within a first echo quality range, determining the first parameter adjustment information based on the second value of the first parameter, the first-moment echo signal quality of the first target, and the first echo quality range; wherein

the second value of the first parameter is determined by the transmit power and transmitting end aperture gain corresponding to the signal transmission that is at the first moment and the receiving end aperture gain corresponding to the echo signal reception.

13. The method according to claim 12, wherein the determining the first parameter adjustment information based on a second value of the first parameter, the first-moment echo signal quality of the first target, and the first preset echo quality comprises:

determining a first value of the first parameter according to a first formula; wherein the first formula is:

$$C' = \frac{P_{r0}}{P_r} C \,,$$

wherein

$C'$ is the first value of the first parameter; C is the second value of the first parameter; $P_{r0}$ is the first preset echo quality; and $P_r$ is the first-moment echo signal quality of the first target.

14. The method according to claim 12, wherein the determining the first parameter adjustment information based on the second value of the first parameter, the first-moment echo signal quality of the first target, and the first echo quality range comprises:

determining a first value of the first parameter according to a second formula; wherein the second formula is:

$$C' = \frac{P}{P_r} C \,,$$

wherein

$C'$ is the first value of the first parameter; C is the second value of the first parameter; and $P_r$ is the first-moment echo signal quality of the first target; and

in a case that the first-moment echo signal quality of the first target is greater than an upper-limit echo quality of the first echo quality range, P is the upper-limit echo quality of the first echo quality range; or

in a case that the first-moment echo signal quality of the first target is less than a lower-limit echo quality of the first echo quality range, P is the lower-limit echo quality of the first echo quality range; or

P is an arithmetic mean or geometric mean of the upper-limit echo quality and lower-limit echo quality of the first echo quality range.

15. The method according to claim 11, wherein that the first device determines the first parameter adjustment information based on a second-moment distance prediction value of the first target and the first-moment echo signal quality of the first target comprises:

in a case of determining to maintain the echo signal quality of the first target around a first preset echo quality, determining the first parameter adjustment information based on a second value of the first parameter, the first-moment echo signal quality of the first target, the first preset echo quality, and the second-moment distance prediction value of the first target;

or

in a case of determining to maintain the echo signal quality of the first target within a first echo quality range, determining the first parameter adjustment information based on a second value of the first parameter, the first-moment echo signal quality of the first target, the first echo quality range, and the second-moment distance prediction value of the first target.

16. The method according to claim 15, wherein the determining the first parameter adjustment information based on a second value of the first parameter, the first-moment echo signal quality of the first target, the first preset echo quality, and the second-moment distance prediction value of the first target comprises:

determining the first value of the first parameter according to a third formula; wherein the third formula comprises:

$$C' = \left(\frac{R'}{R}\right)^4 \frac{P_{r0}}{P_r} C \quad \text{or} \quad C' = \left(\frac{R_t' R_r'}{R_t R_r}\right)^2 \frac{P_{r0}}{P_r} C,$$

wherein $C'$ is the first value of the first parameter; C is the second value of the first parameter; $P_{r0}$ is the first preset echo quality; $P_r$ is the first-moment echo signal quality of the first target; R is a distance between the first target and a signal transceiver at the first moment in a single-station radar scenario; $R'$ is a distance prediction value between the first target and the signal transceiver at the second moment in a single-station radar scenario; $R_t$ is a distance between the first target and a transmitting end device at the first moment in a dual-station radar scenario; $R_t'$ is a distance prediction value between the first target and the transmitting end device at the second moment in a dual-station radar scenario; $R_r$ is a distance between the first target and a receiving end device at the first moment in a dual-station radar scenario; and $R_r'$ is a distance prediction value between the first target and the receiving end device at the second moment in a dual-station radar scenario.

17. The method according to claim 15, wherein the determining the first parameter adjustment information based on a second value of the first parameter, the first-moment echo signal quality of the first target, the first echo quality range, and the second-moment distance prediction value of the first target comprises:

determining the first value of the first parameter according to a fourth formula; wherein the fourth formula comprises:

$$C' = \left(\frac{R'}{R}\right)^4 \frac{P}{P_r} C \quad \text{or} \quad C' = \left(\frac{R_t' R_r'}{R_t R_r}\right)^2 \frac{P}{P_r} C$$

wherein

$C'$ is the first value of the first parameter; C is the second value of the first parameter; $P_r$ is the first-moment echo signal quality of the first target; R is a distance between the first target and a signal transceiver at the first moment in a single-station radar scenario; $R'$ is a distance prediction value between the first target and the signal transceiver at the second moment in a single-station radar scenario; $R_t$ is a distance between the first target and a transmitting end device at the first moment in a dual-station radar scenario; $R_t'$ is a distance prediction value between the first target and the transmitting end device at the second moment in a dual-station radar scenario; $R_r$ is a distance between the first target and a receiving end device at the first moment in a dual-station radar scenario; and $R_r'$ is a distance prediction value between the first target and the receiving end device at the second moment in a dual-station radar scenario; and

in a case that the first-moment echo signal quality of the first target is greater than an upper-limit echo quality of the first echo quality range, P is the upper-limit echo quality of the first echo quality range; or

in a case that the first-moment echo signal quality of the first target is less than a lower-limit echo quality of the first echo quality range, P is the lower-limit echo quality of the first echo quality range; or

P is an arithmetic mean or geometric mean of the upper-limit echo quality and lower-limit echo quality of the first echo quality range.

18. The method according to claim 1, wherein before the determining first parameter adjustment information based on a parameter of the first target, the method further comprises:

determining the RCS of the first target based on an echo signal power of the first target and a first distance of the first target relative to a transceiver;

or

determining the RCS of the first target based on an echo signal power of the first target, a second distance of the first target relative to a transmitting end device, and a third distance of the first target relative to a receiving end device.

**19.** The method according to claim 12 or 15, wherein the method further comprises:
determining the first preset echo quality or the first echo quality range based on a first condition; wherein the first condition comprises at least one of the following:

echo signal quality required by a sensing indicator in sensing demand;
echo signal quality corresponding to a transmit signal power required by communication quality of a communication function in an integrated sensing and communication application; and
echo signal quality required by an interference level limitation of the communication function in the integrated sensing and communication application.

**20.** A wireless sensing parameter determination method, comprising:

determining, by a third device, an initial value of a first parameter based on a radar cross section RCS of a sensing target comprised in sensing demand and a maximum effective range of radar detection; wherein
a value of a first parameter is determined by a first product, the first product being a product of a transmit power of a first signal, transmitting end aperture gain, and receiving end aperture gain.

**21.** The method according to claim 20, wherein the method further comprises:

configuring, by the third device, the transmit power of the first signal, the transmitting end aperture gain, and the receiving end aperture gain based on the initial value of the first parameter, capability information of a transmitting end device, and capability information of a receiving end device; wherein
the capability information comprises an information set of a currently available transmit power configuration and antenna array configuration of the corresponding device.

**22.** The method according to claim 21, wherein the configuring, by the third device, the transmit power of the first signal, the transmitting end aperture gain, and the receiving end aperture gain based on the initial value of the first parameter, capability information of a transmitting end device, and capability information of a receiving end device comprises:

configuring, by the third device, the transmit power of the first signal, the transmitting end aperture gain, and the receiving end aperture gain in a power-first manner or an aperture-first manner based on the initial value of the first parameter, the capability information of the transmitting end device, and the capability information of the receiving end device; wherein
the power-first manner comprises: prioritizing configuring the transmit power to meet a requirement of the first parameter, and in a case that the transmit power reaching an upper limit of a configured power range is still unable to meet the requirement of the first parameter, configuring the transmitting end aperture gain and/or the receiving end aperture gain to meet the requirement of the first parameter; and
the aperture-first manner comprises: prioritizing configuring the transmitting end aperture gain and/or the receiving end aperture gain to meet the requirement of the first parameter, and in a case that the transmitting end aperture gain and/or the receiving end aperture gain reaching an upper limit of the aperture gain is still unable to meet the requirement of the first parameter, configuring the transmit power to meet the requirement of the first parameter.

**23.** The method according to claim 22, wherein a manner of configuring the transmitting end aperture gain and/or the receiving end aperture gain comprises: prioritizing the transmitting end aperture gain or prioritizing the receiving end aperture gain; wherein

the prioritizing the transmitting end aperture gain comprises: prioritizing configuring the transmitting end aperture gain, and in a case that the transmitting end aperture gain configuration reaching the upper limit of the transmitting end aperture gain is still unable to meet the requirements of the first parameter, configuring the receiving end aperture gain to meet the requirement of the first parameter; and
the prioritizing the receiving end aperture gain comprises: prioritizing configuring the receiving end aperture gain, and in a case that the receiving end aperture gain configuration reaching the upper limit of the receiving end aperture gain is still unable to meet the requirement of the first parameter, configuring the transmitting end aperture gain to meet the requirement of the first parameter.

**24.** The method according to claim 21, wherein in a case that the third device is a transmitting end device, the method further comprises:

sending, by the transmitting end device, the configured receiving end aperture gain to the receiving end device; or

in a case that the third device is a receiving end device, the method further comprises:

sending, by the receiving end device, the configured transmit power of the first signal and the configured transmitting end aperture gain to the transmitting end device; or in a case that the third device is a sensing function element, the method further comprises:

sending, by the sensing function element, the configured transmit power of the first signal and the configured transmitting end aperture gain to the transmitting end device, and sending the configured receiving end aperture gain to the receiving end device.

25. The method according to claim 21 or 24, wherein in a case that the third device is a transmitting end device, the method further comprises:
sending, by the transmitting end device, the first signal based on the configured transmit power of the first signal and the configured transmitting end aperture gain.

26. The method according to claim 21 or 24, wherein in a case that the third device is a receiving end device, the method further comprises:
receiving, by the receiving end device, the echo signal of the first signal based on the configured receiving end aperture gain.

27. A wireless sensing parameter determination apparatus, applied to a first device, comprising:

a first determination module configured to determine first parameter adjustment information based on echo signal quality of a first target or a parameter of the first target, the first parameter adjustment information being used to indicate signal transmission and echo signal reception that are at a second moment; wherein the first device measures an echo signal of a first signal sent at a first moment to obtain the echo signal quality of the first target or the parameter of the first target; or the first device receives the echo signal quality of the first target or the parameter of the first target from a second device, the echo signal quality of the first target or the parameter of the first target being obtained by the second device by measuring the echo signal of the first signal sent at the first moment; wherein the second moment is after the first moment; a value of a first parameter is determined by a first product, the first product being a product of transmit power of the first signal, transmitting end aperture gain, and receiving end aperture gain; and the parameter of the first target comprises at least one of a radar cross section RCS of the first target and distance information of the first target.

28. A wireless sensing parameter determination apparatus, applied to a third device, comprising:

a fifth determination module configured to determine an initial value of a first parameter based on a radar cross section RCS of a sensing target comprised in sensing demand and a maximum effective range of radar detection; wherein a value of a first parameter is determined by a first product, the first product being a product of a transmit power of a first signal, transmitting end aperture gain, and receiving end aperture gain.

29. A first device, comprising a processor and a memory, wherein the memory stores a program or instructions capable of running on the processor, and when the program or instructions are executed by the processor, the steps of the wireless sensing parameter determination method according to any one of claims 1 to 19 are implemented.

30. A third device, comprising a processor and a memory, wherein the memory stores a program or instructions capable of running on the processor, and when the program or instructions are executed by the processor, the steps of the wireless sensing parameter determination method according to any one of claims 20 to 26 are implemented.

31. A readable storage medium, wherein the readable storage medium stores a program or instructions, and when the program or instructions are executed by a processor, the steps of the wireless sensing parameter determination method according to any one of claims 1 to 19 or the steps of the wireless sensing parameter determination method according to any one of claims 20 and 26 are implemented.

FIG. 1

A third device determines an initial value of a first parameter based on a radar cross section RCS of a sensing target included in sensing demand and a maximum effective range of radar detection; where the first parameter is a product of a transmit power of a first signal, transmitting end aperture gain, and receiving end aperture gain

201

FIG. 2

Configurable antenna array elements

| | | | | | | | | |
|---|---|---|---|---|---|---|---|---|
| 8 | 8 | 16 | 24 | 32 | 40 | 48 | 56 | 64 |
| 7 | 7 | 14 | 21 | 28 | 35 | 42 | 49 | 56 |
| 6 | 6 | 12 | 18 | 24 | 30 | 36 | 42 | 48 |
| 5 | 5 | 10 | 15 | 20 | 25 | 30 | 35 | 40 |
| 4 | 4 | 8 | 12 | 16 | 20 | 24 | 28 | 32 |
| 3 | 3 | 6 | 9 | 12 | 15 | 18 | 21 | 24 |
| 2 | 2 | 4 | 6 | 8 | 10 | 12 | 14 | 16 |
| 1 | 1 | 2 | 3 | 4 | 5 | 6 | 7 | 8 |
| | 1 | 2 | 3 | 4 | 5 | 6 | 7 | 8 |

Elevation array elements

Azimuth array elements

FIG. 3

Sensing function element

Transmitting end device

Receiving end device

FIG. 4

Sensing function element

Transmitting end device

Receiving end device

FIG. 5

Sensing function element

Transmitting end device/
Receiving end device

Receiving end device/
Transmitting end device

FIG. 6

Start

A first device determines first parameter adjustment information based on echo signal quality of a first target or a parameter of the first target, the first parameter adjustment information being used to indicate signal transmission and echo signal reception that are at a second moment, where a value of the first parameter is determined by a first product, the first product being a product of a transmit power of a first signal, transmitting end aperture gain, and receiving end aperture gain

701

End

FIG. 7

Wireless sensing parameter determination apparatus

First determination module

800

801

FIG. 8

Wireless sensing parameter determination apparatus

Fifth determination module

900

901

FIG. 9

1000

Communication device

1001

Processor

Memory

1002

FIG. 10

FIG. 11

## INTERNATIONAL SEARCH REPORT

| International application No. |
| --- |
| **PCT/CN2022/139836** |

**A.    CLASSIFICATION OF SUBJECT MATTER**

G01S 7/41(2006.01)i;H04W 24/02(2009.01)i

According to International Patent Classification (IPC) or to both national classification and IPC

**B.    FIELDS SEARCHED**

Minimum documentation searched (classification system followed by classification symbols)

IPC:G01S,H04W

Documentation searched other than minimum documentation to the extent that such documents are included in the fields searched

Electronic data base consulted during the international search (name of data base and, where practicable, search terms used)

CNTXT, ENTXTC, VEN, CNKI, 万方 WANFANG, IEEE, 3GPP: 通信, 雷达, 感知, 一体化, 发射功率, 回波, 距离, 增益, 雷达截面积, 配置, 调整, 控制, communication, radar, sensing, integrat+, transmission, power, echo, distance, range, gain, radar cross section, RCS, configur+, adjust+, control

**C.    DOCUMENTS CONSIDERED TO BE RELEVANT**

| Category* | Citation of document, with indication, where appropriate, of the relevant passages | Relevant to claim No. |
| --- | --- | --- |
| X | US 2020103498 A1 (METAWAVE CORP.) 02 April 2020 (2020-04-02)<br>claims 1-19, description, paragraphs 0012-0046, and figures 1-6 | 1-18, 20-31 |
| Y | US 2020103498 A1 (METAWAVE CORP.) 02 April 2020 (2020-04-02)<br>claims 1-19, description, paragraphs 0012-0046, and figures 1-6 | 19 |
| Y | US 2021286045 A1 (HUAWEI TECHNOLOGIES CO., LTD.) 16 September 2021<br>(2021-09-16)<br>description, paragraphs 0035-0055 | 19 |
| A | CN 112788612 A (SHANGHAI HUAWEI TECHNOLOGIES CO., LTD.) 11 May 2021<br>(2021-05-11)<br>entire document | 1-31 |
| A | CN 104076342 A (XIDIAN UNIVERSITY) 01 October 2014 (2014-10-01)<br>entire document | 1-31 |
| A | CN 113452498 A (SOUTHEAST UNIVERSITY) 28 September 2021 (2021-09-28)<br>entire document | 1-31 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 March 2023** | **03 March 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/139836**

**C.    DOCUMENTS CONSIDERED TO BE RELEVANT**

| Category* | Citation of document, with indication, where appropriate, of the relevant passages | Relevant to claim No. |
|---|---|---|
| A | CN 107462871 A (PANASONIC INTELLECTUAL PROPERTY MANAGEMENT CO., LTD.) 12 December 2017 (2017-12-12)<br>entire document | 1-31 |
| A | CN 106291487 A (SHANGHAI RADIO EQUIPMENT RESEARCH INSTITUTE) 04 January 2017 (2017-01-04)<br>entire document | 1-31 |

INTERNATIONAL SEARCH REPORT
Information on patent family members

International application No.

**PCT/CN2022/139836**

| Patent document cited in search report | | | Publication date (day/month/year) | Patent family member(s) | | | Publication date (day/month/year) |
|---|---|---|---|---|---|---|---|
| US | 2020103498 | A1 | 02 April 2020 | None | | | |
| US | 2021286045 | A1 | 16 September 2021 | EP | 4107542 | A1 | 28 December 2022 |
| | | | | WO | 2021180210 | A1 | 16 September 2021 |
| | | | | US | 11474197 | B2 | 18 October 2022 |
| CN | 112788612 | A | 11 May 2021 | None | | | |
| CN | 104076342 | A | 01 October 2014 | None | | | |
| CN | 113452498 | A | 28 September 2021 | None | | | |
| CN | 107462871 | A | 12 December 2017 | JP | 2017219353 | A | 14 December 2017 |
| | | | | US | 2017350963 | A1 | 07 December 2017 |
| | | | | EP | 3252496 | A1 | 06 December 2017 |
| CN | 106291487 | A | 04 January 2017 | None | | | |

Form PCT/ISA/210 (patent family annex) (July 2022)

**EP 4 455 715 A1**

**Patent documents cited in the description**

- CN 202111580759